(19) Europäisches Patentamt
European Patent Office
Office européen des brevets

(11) **EP 4 632 666 A1**

(12) **EUROPEAN PATENT APPLICATION**
published in accordance with Art. 153(4) EPC

(43) Date of publication:
**15.10.2025 Bulletin 2025/42**

(21) Application number: **24791752.9**

(22) Date of filing: **04.03.2024**

(51) International Patent Classification (IPC):
***G06T 5/00*** *(2024.01)*     ***G06V 10/30*** *(2022.01)*
***G06V 10/80*** *(2022.01)*     ***G06V 20/40*** *(2022.01)*
***H04N 5/262*** *(2006.01)*

(52) Cooperative Patent Classification (CPC):
Y02T 10/40

(86) International application number:
**PCT/CN2024/079883**

(87) International publication number:
**WO 2024/217164 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.04.2023   CN 202310457798**

(71) Applicant: **Tencent Technology (Shenzhen)
Company Limited
Shenzhen, Guangdong 518057 (CN)**

(72) Inventor: **CHEN, Yiyun
Shenzhen, Guangdong 518057 (CN)**

(74) Representative: **Nederlandsch Octrooibureau
P.O. Box 29720
2502 LS The Hague (NL)**

(54) **VIDEO DENOISING MODEL PROCESSING METHOD AND APPARATUS, COMPUTER DEVICE, AND STORAGE MEDIUM**

(57)     This application relates to a video denoising model obtaining method and apparatus, a computer device, a storage medium, and a computer program product. The method may be applied to the field of artificial intelligence. The method includes: obtaining a target video frame in a video frame sequence of a sample video, and obtaining a reference video frame in a reference video corresponding to the sample video, the reference video frame being a video frame in the reference video and corresponding to the target video frame (S202); applying a first branch of the video denoising model to the target video frame, in order to extract an image detail feature of the target video frame (S204); performing feature extraction on the downsampled video frame sequence by using a second branch of the video denoising model, to obtain an image fusion feature (S206); generating a predicted video frame based on the image fusion feature and the image detail feature (S208); and adjusting parameters in the video denoising model according to a loss value between the predicted video frame and a video frame in a reference video frame that corresponds to the target video frame, to obtain a target video denoising model (S210). By using this method, a denoising effect of the target video denoising model can be improved.

FIG. 2a

**EP 4 632 666 A1**

**Description**

RELATED APPLICATION

This application claims priority to Chinese Patent Application No. 2023104577981, entitled "VIDEO DENOISING MODEL PROCESSING METHOD AND APPARATUS, COMPUTER DEVICE, AND STORAGE MEDIUM" and filed on April 18, 2023, which is incorporated by reference in its entirety.

FIELD OF THE TECHNOLOGY

This application relates to the field of computer technologies, and in particular, to a video denoising model processing method and apparatus, a computer device, and a storage medium.

BACKGROUND OF THE DISCLOSURE

With the development of computer vision technology, video denoising technology has gradually become a research hotspot in the field of improving video quality. Deep learning-based video denoising models have significant advantages in denoising effect and speed, and have wide application prospects.
However, existing single frame-based video denoising models are unable to extract good features due to the inability to fully consider the temporal correlation and continuity of videos, and multi-frame-based video denoising models are unable to extract good features under limited computational resources, resulting in poor denoising effects on videos by existing video denoising models.

SUMMARY

According to various embodiments provided in this application, a video denoising model processing method and apparatus, a computer device, a computer-readable storage medium, and a computer program product are provided, to improve a video denoising effect.
According to a first aspect, this application provides a video denoising model processing method. The method is performed by a computer device. The method includes:

obtaining a target video frame in a video frame sequence of a sample video, and obtaining a reference video frame in a reference video corresponding to the sample video, the reference video frame being a video frame in the reference video and corresponding to the target video frame;

applying a first branch of the video denoising model to the target video frame, in order to extract an image detail feature of the target video frame;

downsampling the video frame sequence to obtain a downsampled video frame sequence, and performing feature extraction on the downsampled video frame sequence by using a second branch of the video denoising model, to obtain an image fusion feature;

generating a predicted video frame based on the image fusion feature and the image detail feature; and

adjusting parameters in the video denoising model according to a loss value between the predicted video frame and a reference video frame, to obtain a target video denoising model.

According to a second aspect, this application further provides a video denoising model processing apparatus. The apparatus includes:

a video frame obtaining module, configured to obtain a target video frame in a video frame sequence of a sample video, and obtain a reference video frame in a reference video corresponding to the sample video, the reference video frame being a video frame in the reference video and corresponding to the target video frame;

a detail feature extraction module, configured to apply a first branch of the video denoising model to the target video frame, in order to extract an image detail feature of the target video frame;

a fusion feature extraction module, configured to downsampling the video frame sequence to obtain a downsampled video frame sequence, and performing feature extraction on the downsampled video frame sequence by using a second branch of the video denoising model, to obtain an image fusion feature;

a prediction module, configured to generate a predicted video frame based on the image fusion feature and the image detail feature;

a parameter adjustment module, configured to adjust parameters in the video denoising model according to a loss value between the predicted video frame and a reference video frame, to obtain a target video denoising model, the reference video frame being a video frame in the reference video that corresponds to the target video frame; and the target video denoising model being configured to denoise a to-be-denoised video.

According to a third aspect, this application further provides a computer device. The computer device includes a memory and a processor, the memory having computer-readable instructions stored therein, and the processor implementing the operations in the video denoising model processing method when executing the computer-readable instructions.

According to a fourth aspect, this application further provides a computer-readable storage medium. The computer-readable storage medium has computer-readable instructions stored therein, the computer-readable instructions, when executed by a processor, causing the operations in the video denoising model processing method to be implemented.

According to a fifth aspect, this application further provides a computer program product. The computer program product includes computer-readable instructions, and the computer-readable instructions, when executed by a processor, causing the operations in the video denoising model processing method to be implemented.

The details of one or more embodiments of this application are disclosed in the following accompanying drawings and descriptions. Other features, objectives, and advantages of this application become clearer from the specification, the accompanying drawings, and the claims.

BRIEF DESCRIPTION OF THE DRAWINGS

To describe the technical solutions in embodiments of this application or the conventional technology more clearly, the following briefly describes the accompanying drawings required for describing the embodiments or the conventional technology. Apparently, the accompanying drawings in the following description show merely the embodiments of this application, and a person of ordinary skill in the art may derive other drawings from these accompanying drawings without creative efforts.

FIG. 1 is a diagram of an application environment of a video denoising model processing method according to an embodiment.

FIG. 2a is a schematic flowchart of a video denoising model processing method according to an embodiment.

FIG. 2b is a schematic flowchart of a video denoising model processing method according to another embodiment.

FIG. 3 is a schematic diagram of denoising a noisy video frame according to an embodiment.

FIG. 4 is a schematic diagram of adding noise to a video frame according to an embodiment.

FIG. 5 is a schematic diagram of a real noise image according to an embodiment.

FIG. 6 is a schematic flowchart of image fusion feature extraction operations according to an embodiment.

FIG. 7 is a schematic flowchart of video denoising operations according to an embodiment.

FIG. 8 is a schematic flowchart of a video denoising model processing method according to another embodiment.

FIG. 9 is a schematic diagram of sample data processing according to an embodiment.

FIG. 10 is a schematic structural diagram of a video denoising model according to an embodiment.

FIG. 11 is a schematic diagram of a noisy video frame according to another embodiment.

FIG. 12 is a schematic diagram of a denoised video frame according to an embodiment.

FIG. 13 is a structural block diagram of a video denoising model processing apparatus according to an embodiment.

FIG. 14 is a structural block diagram of a video denoising model processing apparatus according to another embodiment.

FIG. 15 is a diagram of an internal structure of a computer device according to an embodiment.

FIG. 16 is a diagram of an internal structure of a computer device according to another embodiment.

DESCRIPTION OF EMBODIMENTS

To make the objectives, the technical solutions, and the advantages of this application clearer, the following further describes this application in detail with reference to the accompanying drawings and the embodiments. The specific embodiments described herein are only used for explaining this application, and are not used for limiting this application.

In the following descriptions, related terms "first, second, and third" are merely intended to distinguish between similar objects, and do not indicate a particular order for the objects. The "first, second, and third" may exchange particular orders or precedence orders as permitted, so that the embodiments of this application described herein can be implemented in orders other than the order shown or described herein.

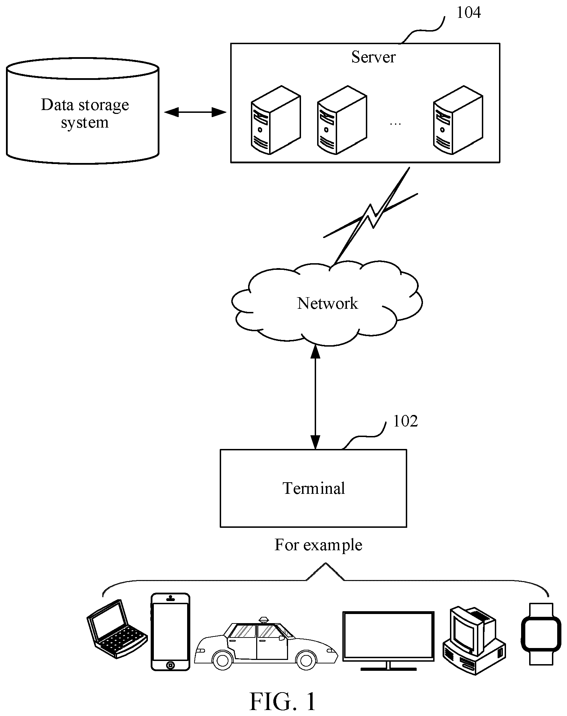

A video denoising model processing method provided in an embodiment of this application may be applied to an application environment shown in FIG. 1. A terminal 102 communicates with a server 104 through a network. A data storage system may store data that the server 104 needs to process. The data storage system may be integrated on the server 104, or placed on a cloud or another server. The video denoising model processing method is independently performed by the terminal 102 or the server 104, or is cooperatively performed by the terminal 102 and the server 104. In some embodiments, the video denoising model processing method is performed by the terminal 102. The terminal 102 obtains a target video frame in a video frame sequence of a sample video, and obtains a reference video corresponding to the sample video; extracts an image detail feature of the target video frame by using a first branch of a video denoising model; downsamples the video frame sequence to obtain a downsampled video frame sequence, and performs feature extraction on the downsampled video frame sequence by using a second branch of the video denoising model, to obtain an image fusion feature; generates a predicted video frame based on the image fusion feature and the image detail feature; and adjusts parameters in the video denoising model according to a loss value between the predicted video frame and a reference video frame, to obtain a target video denoising model, the reference video frame being a video frame in the reference video that corresponds to the target video frame; and the target video denoising model being configured to denoise a to-be-denoised video.

The terminal 102 may be, but not limited to, a desktop computer, a notebook computer, a smart phone, a tablet computer, an Internet of Things device, and a portable wearable device. The Internet of Things device may be a smart speaker, a smart television, a smart air conditioner, a smart in-vehicle device, or the like. The portable wearable device may be a smart watch, a smart band, a head-mounted device, or the like. The server 104 may be an independent physical server, or may be a server cluster including a plurality of physical servers or a distributed system, or may be a cloud server providing basic cloud computing services such as a cloud service, a cloud database, cloud computing, a cloud function, cloud storage, a network service, cloud communication, a middleware service, a domain name service, a security service, a CDN, big data, and an artificial intelligence platform. The terminal 102 and the server 104 may be directly or indirectly connected in a wired or wireless communication mode. This is not limited in this application.

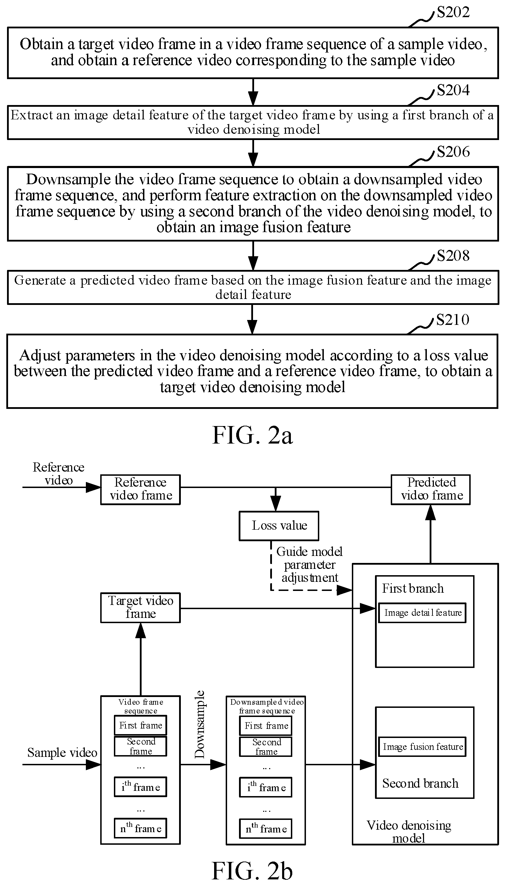

In an embodiment, as shown in FIG. 2a and FIG. 2b, a video denoising model processing method (i.e., a video denoising model obtaining method) is provided. An example in which the method is applied to the computer device (the terminal 102 or the server 104) in FIG. 1 is used for description. The method includes the following operations:

S202: Obtain a target video frame in a video frame sequence of a sample video, and obtaining a reference video frame in a reference video corresponding to the sample video, the reference video frame being a video frame in the reference video and corresponding to the target video frame; in embodiments of the present application, S202 can also include following operations: obtain a target video frame in a video frame sequence of a sample video, and obtain a reference video corresponding to the sample video.

The sample video is video data configured for training a machine learning model. The sample video usually includes a plurality of video frames, and each video frame includes information about video content, such as color, shape, and motion. The sample video may come from various sources, such as real-life footage, simulation-generated videos, and videos on the Internet. The sample video is a video carrying noise. The reference video is a noise-free video or a video with an extremely low noise level that corresponds to the sample video, and is usually used as a "real" or "ideal" state in a video denoising task. In a training and evaluation process of a video denoising model, the reference video provides a target criterion for evaluating a denoising effect and model performance.

In the embodiments of this application, the sample video includes a static video carrying real noise and a noise-added dynamic video. The static video refers to video data generated when the camera is stationary and the subject is not in motion. Since the camera is stationary, the real noise in the static video is usually caused by factors such as noise of the camera, uneven illumination, and sensor noise. Therefore, the static video carrying real noise can better reflect a video noise situation in an actual application. The dynamic video refers to video data generated when the camera or the subject is in motion. The noise-added dynamic video refers to original video data with added noise to simulate a noise situation in an actual application scenario. The noise-added dynamic video enables better testing and evaluation of the robustness and performance of a video denoising algorithm or model. In the embodiments of this application, the reference video includes a clear static video obtained by smoothing the static video and a noise-free clear dynamic video.

Specifically, the terminal extracts the video frame sequence from the sample video according to a time interval, and obtains a current to-be-processed target video frame from the extracted video frame sequence. For example, if the video frame sequence extracted by the terminal from the sample video includes 10 video frames, and the current to-be-processed target video frame is the second frame, the second frame of video frame is obtained from the video frame sequence.

S204: Apply a first branch of the video denoising model to the target video frame, in order to extract an image detail feature of the target video frame; in embodiments of the present application, S204 can also include following operations: Extract an image detail feature of the target video frame by using a first branch of a video denoising model.

The video denoising model is a computer vision model or algorithm configured for removing noise in a video. Video noise is usually caused by factors such as imperfection of a capture device, interference in signal transmission, and a compression algorithm. Therefore, in many video applications, such as video conferencing and video coding, denoising is an important preprocessing operation. A task of the video denoising model is to recover as clear and noise-free video as possible from an inputted noise video, while preserving as much detail and quality as possible in the inputted noise video.

The first branch of the video denoising model may be specifically a high-resolution branch, and is configured to process a target video frame with an original resolution. The original resolution of the target video frame is a high resolution. The high resolution means that a resolution of an image reaches a specific resolution threshold. The resolution threshold may be set according to requirements. A high-resolution target video frame usually carries more noise and richer detail information. Feature processing is performed on the target video frame by using the first branch of the video denoising model, to obtain a richer image detail feature.

The image detail feature refers to a feature of a detailed part in an image, such as a texture, an edge, or a corner. By extracting the image detail feature, noise and signal can be distinguished more accurately, and more detail information can be restored, thereby improving the quality and definition of the image.

Specifically, after obtaining the target video frame, the terminal inputs the target video frame to the first branch of the video denoising model, and processes the target video frame through each network layer of the first branch, to obtain the image detail feature of the target video frame.

S206: Downsample the video frame sequence to obtain a downsampled video frame sequence, and perform feature extraction on the downsampled video frame sequence by using a second branch of the video denoising model, to obtain an image fusion feature.

The downsampled video frame sequence refers to a video frame sequence obtained by downsampling the video frame sequence of the sample video. During image processing, downsampling refers to reducing a resolution of an image, thereby reducing a size of the image while reducing detail information in the image, and is usually configured for reducing a computation amount and memory usage while accelerating a training and inference process of the model.

The second branch of the video denoising model may be specifically a low-resolution branch, and is configured to process the downsampled video frame sequence. A resolution of each downsampled video frame in the downsampled video frame sequence is a low resolution. The low resolution means that a resolution of an image does not reach a specific resolution threshold. The resolution threshold may be set according to requirements. A size of each downsampled video frame in the low-resolution downsampled video frame sequence is reduced or detail information is reduced. Processing the downsampled video frame sequence by using the second branch of the video denoising model can effectively reduce a computation amount, and improve the operation efficiency of the model, while enhancing a generalization capability of the model, making it more suitable for processing videos with different resolutions.

The image fusion feature is a feature representation obtained by fusing features of at least two downsampled video frames in the downsampled video frame sequence. For noisy video data, it is often difficult to obtain a good denoising effect by using a single frame of image for denoising, because the single frame of image may have excessive noise and distortion, and cannot provide sufficient information. A feature expression capability can be improved by fusing features of a plurality of downsampled video frames, thereby improving the denoising effect of the model. In addition, a feature obtained after feature extraction is performed on each downsampled video frame in the downsampled video frame sequence represents that information loss may exist. Fusing the features of the plurality of downsampled video frames can improve the feature expression capability, thereby improving the denoising effect of the model.

Specifically, after obtaining the video frame sequence, the terminal downsamples each video frame in the video frame sequence, to obtain the downsampled video frame sequence, inputs the downsampled video frame sequence into the second branch of the video denoising model, and processes each downsampled video frame in the downsampled video frame sequence by using each sub-branch of the second branch, to obtain the image fusion feature.

S208: Generate a predicted video frame based on the image fusion feature and the image detail feature.

The predicted video frame is a video frame generated after an inputted video in the video denoising model is denoised.

Specifically, after obtaining the image fusion feature and the image detail feature, the terminal fuses the image fusion feature with the image detail feature, to obtain a global image feature, and generates the predicted video frame based on the global image feature.

S210: Adjust parameters in the video denoising model according to a loss value between the predicted video frame and a reference video frame, to obtain a target video denoising model.

The reference video frame is a video frame in the reference video that corresponds to the target video frame. The loss value is configured for evaluating a difference degree between the predicted video frame obtained after the video denoising model denoises the input video and a corresponding video frame in the reference video. Usually, a smaller loss value indicates a smaller difference between a prediction result and a true result of the model, and a better prediction accuracy and effect of the model.

The target video denoising model is a trained machine learning model configured to denoise a to-be-denoised video.

In an embodiment, after obtaining the predicted video frame, the terminal obtains the video frame corresponding to the target video frame from the reference video. The video frame may also be referred to as a reference video frame. The terminal determines the loss value based on the predicted video frame and the corresponding reference video frame, adjusts the parameters in the video denoising model based on the determined loss value until the training is stopped when a convergence condition is satisfied, to obtain the target video denoising model.

Convergence means that a training process of the video denoising model has been stable, that is, the video denoising model has learned the features of the data, and is no longer significantly improved. The convergence condition includes a fixed quantity of training rounds, a fixed threshold of a loss function, or the like. When the model reaches the condition, training is stopped, to avoid overfitting.

Specifically, after obtaining the loss value, the terminal adjusts values of a weight parameter and a bias parameter in the video denoising model based on the loss value, to obtain an adjusted video denoising model, and performs operation S202 again until the training is stopped when the convergence condition is satisfied, to obtain the target video denoising model.

In an embodiment, the terminal may perform determining based on the following formula:

$$L = \sum_{i=1}^{T} \left| I_{GT}^{i} - F(I_{LQ})^{i} \right|$$

L represents a loss value, $I_{LQ}$ represents a video frame sequence in a sample video, T represents a quantity of video frames in the video frame sequence, $F(I_{LQ})^{i}$ represents a predicted video frame corresponding to an $i^{th}$ video frame (the target video frame) in the video frame sequence, and $I_{GT}^{i}$ represents the $i^{th}$ video frame in the reference video, that is, the reference video frame corresponding to the target video frame.

In the foregoing embodiment, after obtaining the target video frame from the video frame sequence of the sample video, the terminal extracts the image detail feature of the target video frame by using the first branch of the video denoising model; after obtaining the downsampled video frame sequence corresponding to the video frame sequence, performs feature extraction on the downsampled video frame sequence by using the second branch of the video denoising model, to obtain the image fusion feature; and generates the predicted video frame based on the image fusion feature and the image detail feature. In this way, not only the temporal correlation and continuity of videos are fully considered, but also the computation amount can be effectively reduced and the operation efficiency of the model can be improved. Therefore, under limited computational resources, the parameters in the video denoising model can also be adjusted according to the loss value between the predicted video frame and the video frame in the reference video that corresponds to the target video frame, to obtain the target video denoising model with a good denoising effect.

In an embodiment, the sample video includes a static video carrying real noise and a noise-added dynamic video; and the reference video includes a clear static video obtained by smoothing the static video and a noise-free dynamic video. The static video including real noise and the noise-added dynamic video are used as sample videos, and the clear static video obtained by smoothing the static video and the noise-free dynamic video are used as references, to better simulate a noise situation in a real scenario, thereby further improving the denoising effect of the target video denoising model.

In an embodiment, the static video further carries added noise, and the foregoing video denoising model processing method further includes the following operations: performing video capture on a static object, to obtain an original static video carrying real noise; performing noise addition on the original static video, to obtain the static video, where the static video carries added noise and the real noise; and smoothing the original static video, to obtain the clear static video.

The added noise is noise manually added to a video. Types of the added noise include Gaussian noise, salt-and-pepper noise, pseudo-random noise, and the like. The static object refers to an object that remains stationary. The smoothing is an image processing method, and is mainly used to reduce noise of an image. During video processing, the smoothing may be applied to each frame of image of a video. By performing a smoothing operation on each frame of image, the video can be made smoother and more natural, and with less noise. The smoothing usually needs to be applied to each frame of image. Therefore, for the video, the smoothing may also be referred to as time-domain filtering.

Specifically, the terminal keeps a video capture device stationary, and captures the static object, to obtain the static video. The static video is the original static video carrying real noise. Noise addition is performed on the original static video by using a preset noise addition algorithm, to obtain the static video. The static video carries the added noise and the real noise. In addition, the original static video is smoothed by using a preset smoothing algorithm, to obtain the clear static video.

The smoothing algorithm includes Gaussian blurring, median filtering, mean filtering, and the like. The Gaussian blurring may reduce noise of an image by performing weighted averaging on pixel points around each pixel point. The median filtering and the mean filtering reduce noise of an image by calculating a median or a mean of pixel points around each pixel point.

A noise level of the clear static video is apparently reduced compared with a noise level of the original static video. Therefore, the clear static video may also be approximated as a noise-free video, so that the clear static video is used as a noise-free reference video during model training.

In an embodiment, the process of the terminal smoothing the original static video by using the preset smoothing algorithm, to obtain the clear static video specifically includes the following operations: determining a frame difference between adjacent original static video frames in the original static video, determining a region in which the frame difference reaches a frame difference threshold as a noise region in a corresponding original static video frame, and smoothing the noise region in each original static video frame, to obtain the clear static video.

Although the original static video carrying real noise is obtained by performing video capture on the static object, during video capture, the capture device may not be absolutely stable, and there may be some very small jitters, and a gas flow in the environment causes slight motion of the static object. Consequently, the obtained original static video is not absolutely static, but is relatively static. For an absolutely static static video, if noise does not exist between adjacent video frames, the frame difference between the adjacent video frames is to be 0.

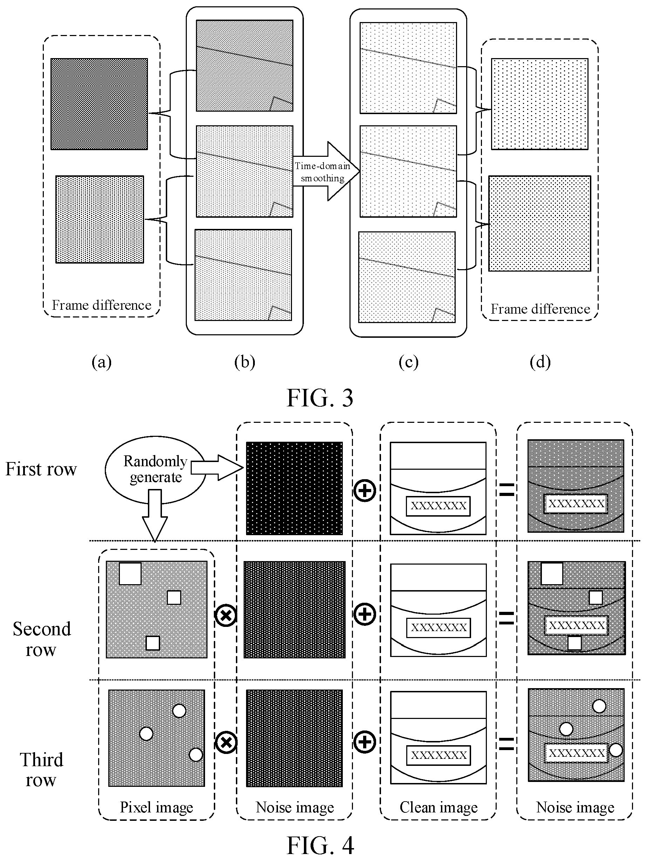

Referring to FIG. 3, (b) in FIG. 3 shows three adjacent noisy video frames, and (a) in FIG. 3 is a schematic diagram of a frame difference between two adjacent noisy video frames. After the three noisy video frames are smoothed, a clear video frame shown in (c) in FIG. 3 is obtained. (d) in FIG. 3 is a schematic diagram of a frame difference between two adjacent clear video frames. It can be seen from FIG. 3 that, if the original static video is seen from a single noisy video frame, there is no apparent noise, but the frame difference between the two adjacent noisy video frames is large. The corresponding original static video has apparent flicker noise during playback. The flicker noise is inter-frame noise. After time-domain smoothing is performed on the original static video, the frame difference between the two adjacent clear video frames is significantly reduced, indicating that the inter-frame noise is greatly reduced.

In the foregoing embodiment, the terminal performs video capture on the static object, to obtain the original static video carrying real noise, performs noise addition on the original static video, to obtain the static video, the static video carrying the added noise and the real noise, and smoothing the original static video, to obtain the clear static video, so that the static video carrying real noise may be used as the sample video, and the clear static video may be used as the reference video, to train the video denoising model, thereby better simulating a noise situation in a real scenario, and improving the denoising effect of the target video denoising model.

In an embodiment, the process of the terminal performing noise addition on the original static video, to obtain the static video specifically includes the following operations: obtaining some pixels from each noisy video frame of the original static video; generating a corresponding first pixel image according to some pixels of each noisy video frame; generating a first initial noise image corresponding to each noisy video frame; fusing the first initial noise image with the first pixel image, to obtain a first noise image corresponding to each noisy video frame; and fusing each first noise image to the corresponding noisy video frame, to obtain the static video.

Some pixels are some pixel points in the noisy video frame, and may be specifically randomly selected from the noisy video frame. The first pixel image is configured for describing a distribution of some pixel points. Specifically, grayscale values at positions corresponding to some pixel points in the first pixel image are 1, and 1 indicates that noise is added to the position corresponding to the pixel point. Grayscale values at positions other than the positions corresponding to some pixel points are 0, and 0 indicates that no noise is added to the position corresponding to the pixel point.

Specifically, after obtaining the original static video, the terminal obtains each noisy video frame from the original static video, for any noisy video frame, randomly selects some pixels from the noisy video frame, and generates the first pixel image having the same size as the noisy video frame based on the selected some pixels. The grayscale values at the positions corresponding to some pixels in the first pixel image may be 1, and the grayscale values at the positions other than the positions corresponding to some pixels may be 0. The terminal generates the first initial noise image by using the preset noise generation algorithm, dot-multiplies the first pixel image with the first initial noise image, to obtain the first noise image, and fuses the first noise image to the noisy video frame, to obtain the corresponding noise-added static video frame. The foregoing noise addition is performed on each noisy video frame in the original static video, to obtain the noise-added static video.

The preset noise generation algorithm may be a random distribution algorithm, for example, a Gaussian distribution algorithm. The corresponding noisy video frame is processed by using the Gaussian distribution algorithm, to obtain the first initial noise image.

In an embodiment, the terminal fuses the first noise image to the corresponding noisy video frame. Specifically, image fusion may be implemented in a pixel-by-pixel weighted averaging mode, which specifically includes the following operations: obtaining a first weight corresponding to the first noise image and a second weight corresponding to the noisy video frame; determining a weighted pixel value corresponding to each target pixel point based on the first weight, a pixel value of each pixel point in the first noise image, the second weight, and a pixel value of each pixel point in the noisy video frame; and generating the noise-added static video frame based on the weighted pixel value of each target pixel point. The target pixel point refers to a pixel point in the noise-added static video frame.

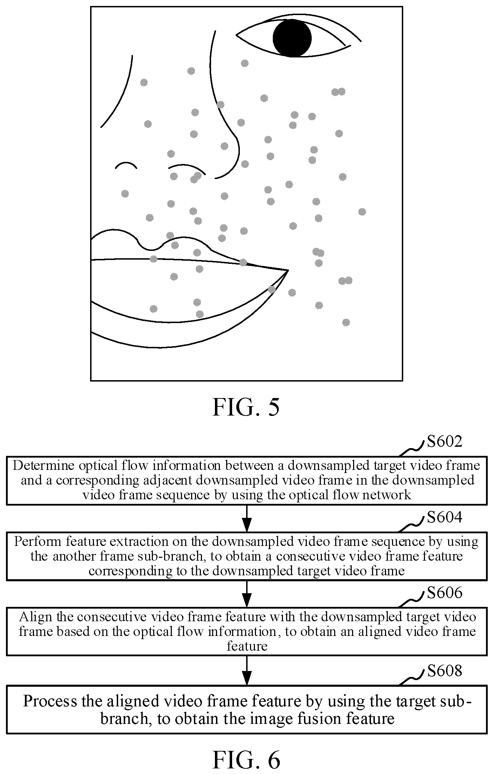

Referring to FIG. 4, the first row in FIG. 4 shows a conventional noise addition mode. The noise addition mode is specifically: first randomly generating a noise image, and directly fusing the noise image to a to-be-noised image (a clean image) to obtain a corresponding noise image. It can be seen from the noise image that noise is uniformly added to the clean image. However, as shown in FIG. 5, in a real image, noise (dots in the figure represent noise) is not uniformly distributed at each pixel position. A noise addition mode used in this embodiment of this application is shown in the second row or the third row in FIG. 4. First, some pixels are randomly selected from the to-be-noised image (the clean image), the pixel image is generated based on the selected some pixels, and the pixel image and the corresponding noise image are fused, to obtain the noise-added noise image. The pixel image is a matrix that is of a same length and width as the to-be-noised image and that is formed by only 0 and 1. 0 represents that noise is not added to the position of the pixel, and 1 represents that noise is added to the position of the pixel. The to-be-noised images (the clean images) in the second row and the third row in FIG. 4 are the same, and the noise images generated randomly are also the same, but respectively generated pixel images are different. In addition, noise addition coefficients used during noise addition are different. Therefore, the obtained noise images are different. The noise addition coefficients may be specifically determined based on a weight corresponding to the noise image and a weight corresponding to the clean image.

In the foregoing embodiment, the terminal obtains some pixels from each noisy video frame of the original static video; generates the corresponding first pixel image according to some pixels of each noisy video frame; generates the first initial noise image corresponding to each noisy video frame; fuses the first initial noise image with the first pixel image, to obtain a first noise image corresponding to each noisy video frame; and fuses each first noise image to the corresponding noisy video frame, to obtain the static video. Therefore, the obtained static video can simulate noise distribution in an actual image more accurately while enhancing noise diversity. Training the video denoising model by using the static video can further improve the denoising effect of the video denoising model.

In an embodiment, the foregoing video denoising model processing method further includes the following operations: obtaining a noise-free dynamic video from a video database; and performing noise addition on the noise-free dynamic video, to obtain a noise-added dynamic video.

The dynamic video includes content in motion and change, such as people walking and vehicles travelling. Such a video can present the motion and change of a dynamic object from a plurality of angles. The video database may be a public video data set. The public video data set may be specifically clear video data sets REDS and DAVIS. The video database may also be a clear video database obtained after denoising a video obtained through video capture. Clear in this embodiment of this application may be approximated as noise-free, that is, a clear video is a noise-free video.

Specifically, the terminal may directly obtain the clear dynamic video from the video database, where the dynamic video is the noise-free dynamic video, and perform noise addition on the obtained dynamic video by using the preset noise addition algorithm, to obtain the noise-added dynamic video.

In the foregoing embodiment, the terminal obtains the noise-free dynamic video from the video database and performs noise addition on the noise-free dynamic video, to obtain the noise-added dynamic video, so that the terminal may use the noise-added dynamic video as the sample video and use the noise-free dynamic video as the reference video, to train the video denoising model to better simulate a noise situation in a real scenario, thereby improving the denoising effect of the target video denoising model.

In an embodiment, a video frame in the noise-free dynamic video is a clear video frame, and the process of the terminal performing noise addition on the noise-free dynamic video, to obtain the noise-added dynamic video includes the following operations: selecting some pixels from each clear video frame; generating a corresponding second pixel image according to some pixels of each clear video frame; generating a second initial noise image corresponding to each clear video frame; fusing each second initial noise image with the corresponding second pixel image, to obtain a second noise image corresponding to each clear video frame; and fusing each second noise image to the corresponding clear video frame, to obtain the noise-added dynamic video.

Some pixels are some pixel points in the clear video frame, and may be specifically randomly selected from the clear video frame. The second pixel image is configured for describing a distribution of some pixel points. Specifically, grayscale values at positions corresponding to some pixel points in the second pixel image are 1, and 1 indicates that noise is added to the position corresponding to the pixel point. Grayscale values at positions other than the positions corresponding to some pixel points are 0, and 0 indicates that no noise is added to the position corresponding to the pixel point.

Specifically, after obtaining the noise-free dynamic video, the terminal obtains each clear video frame from the noise-free dynamic video, for any clear video frame, randomly selects some pixels from the clear video frame, and generates the second pixel image having the same size as the clear video frame based on the selected some pixels. The grayscale values at the positions corresponding to some pixels in the second pixel image may be 1, and the grayscale values at the positions other than the positions corresponding to some pixels may be 0. The terminal generates the second initial noise image by using the preset noise generation algorithm, dot-multiplies the second pixel image with the second initial noise image, to obtain the second noise image, and fuses the second noise image to the clear video frame, to obtain the corresponding noise-added dynamic video. The foregoing noise addition is performed on each clear video frame in the noise-free dynamic video, to obtain the noise-added dynamic video.

The preset noise generation algorithm may be a random distribution algorithm, for example, a Gaussian distribution algorithm, and the corresponding clear video frame is processed by using the Gaussian distribution algorithm, to obtain the second initial noise image.

In an embodiment, the terminal fuses the second noise image to the corresponding clear video frame. Specifically, image fusion may be implemented in the pixel-by-pixel weighted averaging mode, which specifically includes the following operations: obtaining a third weight corresponding to the second noise image and a fourth weight corresponding to the clear video frame; determining a weighted pixel value corresponding to each target pixel point based on the third weight, a pixel value of each pixel point in the second noise image, the fourth weight, and a pixel value of each pixel point in the clear video frame; and generating the noise-added dynamic video frame based on the weighted pixel value of each target pixel point. The target pixel point refers to a pixel point in the noise-added dynamic video frame.

In the foregoing embodiment, the terminal selects some pixels from each clear video frame; generates the corresponding second pixel image according to some pixels of each clear video frame; generates the second initial noise image corresponding to each clear video frame; fuses each second initial noise image with the corresponding second pixel image, to obtain the second noise image corresponding to each clear video frame; and fuses each second noise image to the corresponding clear video frame, to obtain the noise-added dynamic video. Therefore, the obtained noise-added dynamic video can simulate noise distribution in an actual image more accurately while enhancing noise diversity. Training the video denoising model by using the noise-added dynamic video can further improve the denoising effect of the video denoising model.

In an embodiment, the second branch includes an optical flow network, a target frame sub-branch, and another frame sub-branch. As shown in FIG. 6, the process of the terminal performing feature extraction on the downsampled video frame sequence by using the second branch of the video denoising model, to obtain the image fusion feature specifically includes the following operations.

S602: Determine optical flow information between a downsampled target video frame and a corresponding adjacent downsampled video frame in the downsampled video frame sequence by using the optical flow network.

The optical flow network is a neural network model configured to estimate the optical flow information, and may be specifically an optical flow network SpyNet. The optical flow information is information about a pixel position change between adjacent video frames. In a video, an object motion or a camera motion may exist between adjacent video frames, and these motions cause different pixel positions between adjacent frames. The optical flow information is information configured for describing the pixel position change between adjacent frames.

In this embodiment of this application, the optical flow information may include the optical flow information between the downsampled target video frame and the corresponding adjacent downsampled video frame in the downsampled video frame sequence, or may include optical flow information between any two adjacent downsampled video frames in the downsampled video frame sequence. The optical flow information may also be referred to as an optical flow vector. The optical flow vector may represent a pixel displacement between adjacent video frames, and may be configured for subsequent frame alignment and feature fusion.

The downsampled video frame sequence refers to a video frame sequence obtained after each video frame in the video frame sequence is downsampled, and may specifically include the downsampled target video frame and a downsampled consecutive video frame. The downsampled consecutive video frame includes at least one of a downsampled preceding video frame or a downsampled subsequent video frame. For example, the downsampled video frame sequence includes five downsampled video frames. If the downsampled target video frame is the third frame in the downsampled video frame sequence, other downsampled video frames than the third frame in the downsampled video frame sequence are downsampled consecutive video frames, where the first frame and the second frame are downsampled preceding video frames, and the fourth frame and the fifth frame are downsampled subsequent video frames. If the downsampled target video frame is the first frame in the downsampled video frame sequence, the second frame to the fifth frame in the downsampled video frame sequence are downsampled subsequent video frames of the downsampled target video frame. If the downsampled target video frame is the fifth frame in the downsampled video frame sequence, the first frame to the fourth frame in the downsampled video frame sequence are downsampled preceding video frames of the downsampled target video frame.

Specifically, after obtaining the downsampled video frame sequence, the terminal inputs each downsampled video frame in the downsampled video frame sequence into the optical flow network, and determines the optical flow information between any two adjacent downsampled video frames in the downsampled video frame sequence by using the optical flow network, to obtain the optical flow information between the downsampled target video frame and the corresponding adjacent downsampled video frame.

In an embodiment, the adjacent downsampled video frame includes at least one of the downsampled preceding video frame or the downsampled subsequent video frame. The optical flow information includes at least one of first optical flow information or second optical flow information, and when the downsampled consecutive video frame includes the downsampled preceding video frame, the terminal determines the first optical flow information between adjacent first downsampled video frames by using the optical flow network; and when the downsampled consecutive video frame includes the downsampled subsequent video frame, the terminal determines the second optical flow information between adjacent second downsampled video frames by using the optical flow network.

The first optical flow information is information between adjacent first downsampled video frames, the second optical flow information is information between adjacent second downsampled video frames, the first downsampled video frame is a downsampled video frame in the downsampled target video frame and the downsampled preceding video frame, and the second downsampled video frame is a downsampled video frame in the downsampled target video frame and the downsampled subsequent video frame. For example, the downsampled video frame sequence includes five downsampled video frames. If the downsampled target video frame is the third frame in the downsampled video frame sequence, the first frame and the second frame in the downsampled video frame sequence are downsampled preceding video frames, and the fourth frame and the fifth frame are downsampled subsequent video frames. The first downsampled video frame is a downsampled video frame in the first frame, the second frame, and the third frame in the sampled video frame sequence, and the first optical flow information includes optical flow information of the first frame to the second frame, and optical flow information of the second frame to the third frame. The second downsampled video frame is a downsampled video frame in the third frame, the fourth frame, and the fifth frame in the sampled video frame sequence, and the second optical flow information includes optical flow information of the fifth frame to the fourth frame, and optical flow information of the fourth frame to the third frame.

Specifically, when the downsampled consecutive video frame includes the downsampled preceding video frame, the terminal inputs each downsampled preceding video frame and the downsampled target video frame in the downsampled video frame sequence into the optical flow network, determines the optical flow information between any two adjacent downsampled video frames in the downsampled preceding video frame and the downsampled target video frame by using the optical flow network, that is, determines optical flow information between the adjacent first downsampled video frames, and determines the optical flow information as the first optical flow information between the downsampled target video frame and the corresponding adjacent downsampled video frame. When the downsampled consecutive video frame includes the downsampled subsequent video frame, the terminal inputs each downsampled subsequent video frame and the downsampled target video frame in the downsampled video frame sequence into the optical flow network, determines the optical flow information between any two adjacent downsampled video frames in the downsampled subsequent video frame and the downsampled target video frame by using the optical flow network, that is, determines optical flow information between the adjacent second downsampled video frames, and determines the optical flow information as the second optical flow information between the downsampled target video frame and the corresponding adjacent downsampled video frame, to better understand the motion and change in the video, thereby achieving more accurate alignment of video frames and extraction of features.

S604: Perform feature extraction on the downsampled video frame sequence by using the another frame sub-branch, to obtain a consecutive video frame feature corresponding to the downsampled target video frame.

The another frame sub-branch is configured to perform feature extraction on a downsampled video frame other than the downsampled target video frame in the downsampled video frame sequence, to obtain the consecutive video frame feature corresponding to the downsampled target video frame. The another frame sub-branch includes at least one of a preceding frame sub-branch or a subsequent frame sub-branch. The preceding frame sub-branch is configured to perform feature extraction on the downsampled preceding video frame, to obtain a preceding video frame feature, and the subsequent frame sub-branch is configured to perform feature extraction on the downsampled subsequent video frame, to obtain a subsequent video frame feature.

Specifically, after obtaining the downsampled video frame sequence, the terminal inputs the downsampled consecutive video frame in the downsampled video frame sequence into the another frame sub-branch, and performs feature extraction on the inputted downsampled consecutive video frames by using the another frame sub-branch, to obtain the consecutive video frame feature corresponding to the downsampled target video frame.

In an embodiment, the adjacent downsampled video frame includes at least one of the downsampled preceding video frame or the downsampled subsequent video frame; and the consecutive video frame feature includes at least one of the preceding video frame feature or the subsequent video frame feature. When the downsampled consecutive video frame includes the downsampled preceding video frame, the terminal performs feature extraction on the downsampled preceding video frame by using a forward network layer of the preceding frame sub-branch, to obtain the preceding video frame feature; and when the downsampled consecutive video frame includes the downsampled subsequent video frame, the terminal performs feature extraction on the downsampled subsequent video frame by using a backward network layer of the subsequent frame sub-branch, to obtain the subsequent video frame feature.

The forward network layer refers to a forward UNet. The backward network layer refers to a backward UNet. The forward UNet is a UNet configured to perform feature extraction on the downsampled preceding video frame. The backward UNet is a UNet configured to perform feature extraction on the downsampled subsequent video frame. The UNet is a convolutional neural network structure configured for an image processing task, and is formed by a downsampling module and an upsampling module, and usually there are some convolutional layers and pooling layers in between.

Specifically, when the downsampled consecutive video frame includes the downsampled preceding video frame, the terminal inputs each downsampled preceding video frame in the downsampled video frame sequence into the preceding frame sub-branch, and performs feature extraction on each downsampled preceding video frame by using the forward network layer of the preceding frame sub-branch, to obtain the preceding video frame feature; and when the downsampled consecutive video frame includes the downsampled subsequent video frame, the terminal inputs each downsampled subsequent video frame in the downsampled video frame sequence into the subsequent frame sub-branch, and performs feature extraction on each downsampled subsequent video frame by using the backward network layer of the subsequent frame sub-branch, to obtain the subsequent video frame feature. In a video frame sequence, there is usually a correlation between the preceding and following frames. A spatio-temporal feature in the video sequence can be better captured by using information about the preceding video frame and the subsequent video frame, thereby achieving more accurate extraction of video frame features.

For example, if the downsampled video frame sequence includes five downsampled video frames, and the downsampled target video frame is the third frame in the downsampled video frame sequence, a preceding frame sub-branch 1 is configured to perform feature extraction on the first frame of downsampled video frame in the downsampled video frame sequence, a preceding frame sub-branch 2 is configured to perform feature extraction on the second frame of downsampled video frame in the downsampled video frame sequence, a subsequent frame sub-branch 3 is configured to perform feature extraction on the fourth frame of downsampled video frame in the downsampled video frame sequence, and a subsequent frame sub-branch 4 is configured to perform feature extraction on the fifth frame of downsampled video frame in the downsampled video frame sequence.

S606: Align the consecutive video frame feature with the downsampled target video frame based on the optical flow information, to obtain an aligned video frame feature.

The "align" refers to matching the consecutive video frame feature with content of the downsampled target video frame. In the video frame sequence, there is a motion relationship between adjacent video frames. The downsampled target video frame and the corresponding consecutive video frame feature may be aligned by using the optical flow information. In this way, during subsequent processing, the downsampled target video frame and the corresponding consecutive video frame feature may be considered as a video frame and a video frame feature at the same moment, thereby improving the accuracy of the model.

In an embodiment, the adjacent downsampled video frame includes at least one of the downsampled preceding video frame or the downsampled subsequent video frame; the optical flow information includes at least one of the first optical flow information or the second optical flow information; the consecutive video frame feature includes at least one of the preceding video frame feature or the subsequent video frame feature; and the aligned video frame feature includes at least one of a preceding aligned video frame feature or a subsequent aligned video frame feature. When the downsampled consecutive video frame includes the downsampled preceding video frame, the terminal aligns the preceding video frame feature with the downsampled target video frame based on the first optical flow information, to obtain the preceding aligned video frame feature; and when the downsampled consecutive video frame includes the downsampled subsequent video frame, the terminal aligns the subsequent video frame feature with the downsampled target video frame based on the second optical flow information, to obtain the subsequent aligned video frame feature.

Specifically, when the downsampled consecutive video frame includes the downsampled preceding video frame, the terminal extracts a feature vector of a preset position from the preceding video frame feature, determines a target position corresponding to the preset position in the downsampled target video frame based on the first optical flow information and the extracted feature vector, and aligns, based on the feature vector of the preset position and the corresponding target position in the downsampled target video frame, the preceding video frame feature with a feature of the downsampled target video frame by using an interpolation method, to obtain the preceding aligned video frame feature; and when the downsampled consecutive video frame includes the downsampled subsequent video frame, the terminal extracts a feature vector of a preset position from the subsequent video frame feature, determines a target position corresponding to the preset position in the downsampled target video frame based on the second optical flow information and the extracted feature vector, and aligns, based on the feature vector of the preset position and the corresponding target position in the downsampled target video frame, the subsequent video frame feature with the feature of the downsampled target video frame by using the interpolation method, to obtain the subsequent aligned video frame feature. The preset position may be a randomly selected position, or may be a pre-specified position.

By aligning the preceding video frame feature and the subsequent video frame feature, more information can be obtained during feature extraction on the downsampled target video frame, thereby improving an effect of feature extraction on the target video frame, and facilitating better denoising. In addition, by using optical flow information in the forward and backward directions, quality of feature extraction on the video frame can be further improved, so that the video denoising model can accurately estimate noise in the aligned video frame feature, thereby further improving the denoising effect of the video denoising model.

S608: Process the aligned video frame feature by using the target sub-branch, to obtain the image fusion feature.

The target sub-branch is configured to perform feature processing on the downsampled target video frame in the downsampled video frame sequence, to obtain the image fusion feature corresponding to the downsampled target video frame.

Specifically, after obtaining the aligned video frame feature corresponding to the downsampled target video frame, the terminal inputs the aligned video frame feature into the target sub-branch, and performs feature processing on the aligned video frame feature by using the target sub-branch, to obtain the image fusion feature.

In an embodiment, when the downsampled consecutive video frame includes the downsampled preceding video frame, the terminal processes the preceding aligned video frame feature by using a forward network layer of the target sub-branch, to obtain a preceding image fusion feature; when the downsampled consecutive video frame includes the downsampled subsequent video frame, the terminal processes the subsequent aligned video frame feature by using a backward network layer of the target sub-branch, to obtain a subsequent image fusion feature; and the image fusion feature is determined based on at least one of the preceding image fusion feature or the subsequent image fusion feature.

The forward network layer refers to a forward UNet, and the backward network layer refers to a backward UNet. The forward UNet of the target sub-branch is a UNet configured to perform feature processing on the preceding aligned video frame feature. The backward UNet of the target sub-branch is a UNet configured to perform feature processing on the subsequent aligned video frame feature. The UNet is a convolutional neural network structure configured for an image processing task, and is formed by a downsampling module and an upsampling module, and usually there are some convolutional layers and pooling layers in between.

Specifically, when the downsampled consecutive video frame includes the downsampled preceding video frame, the terminal inputs the preceding aligned video frame feature into the forward network layer of the target sub-branch, and performs feature processing on the preceding aligned video frame feature by using the forward network layer of the target sub-branch, to obtain the preceding image fusion feature; when the downsampled consecutive video frame includes the downsampled subsequent video frame, the terminal inputs the subsequent aligned video frame feature into the forward network layer of the target sub-branch, and performs feature processing on the subsequent aligned video frame feature by using the forward network layer of the target sub-branch, to obtain the subsequent image fusion feature; when the downsampled consecutive video frame includes only the downsampled preceding video frame, the preceding image fusion feature is directly determined as the image fusion feature; when the downsampled consecutive video frame includes only the downsampled subsequent video frame, the subsequent image fusion feature is directly determined as the image fusion feature; and when the downsampled consecutive video frame includes the downsampled preceding video frame and the downsampled subsequent video frame, the image fusion feature is determined based on the preceding image fusion feature and the subsequent image fusion feature.

In the foregoing embodiment, the terminal determines the optical flow information between the downsampled target video frame in the downsampled video frame sequence and the corresponding adjacent downsampled video frame by using the optical flow network of the second branch, and performs feature processing on the downsampled video frame sequence by using the another frame sub-branch of the second branch, to obtain the consecutive video frame feature corresponding to the downsampled target video frame, so that the motion and change in the video can be better understood by using consecutive frame information and the optical flow information in the video sequence, to obtain an accurate video feature representation. In addition, by processing the aligned video frame feature by using the target sub-branch of the second branch, a more accurate image fusion feature can be obtained, making subsequent image reconstruction more accurate based on the image fusion feature, thereby improving the denoising effect of the target video denoising model.

In an embodiment, when the downsampled consecutive video frame includes the downsampled preceding video frame and the downsampled subsequent video frame, the process of the terminal determining the image fusion feature based on the preceding image fusion feature and the subsequent image fusion feature specifically includes the following operations: splicing the preceding image fusion feature and the subsequent image fusion feature, to obtain a spliced image feature, and performing convolution processing on the spliced image feature, to obtain the image fusion feature.

Specifically, after obtaining the preceding image fusion feature and the subsequent image fusion feature, the terminal splices the preceding image fusion feature and the subsequent image fusion feature, to obtain the spliced image feature, inputs the spliced image feature into a convolutional layer of the target subbranch, and performs convolution processing on the spliced image feature by using the convolutional layer, to obtain more advanced feature information. The more advanced feature information is the image fusion feature.

In the foregoing embodiment, the terminal can effectively fuse information about the preceding and subsequent video frames by splicing the preceding image fusion feature and the subsequent image fusion feature, and fully uses an association between consecutive frames in the preceding and subsequent video frames, to obtain an accurate video feature representation. In addition, performing convolution processing on the spliced image feature can further implement feature extraction and enhancement, to obtain a more accurate image fusion feature, making subsequent image reconstruction more accurate based on the image fusion feature, thereby improving the denoising effect of the target video denoising model.

In an embodiment, the process of the terminal generating the predicted video frame based on the image fusion feature and the image detail feature specifically includes the following operations: fusing the image fusion feature with the image detail feature, to obtain a global image feature; and performing image reconstruction based on the global image feature, to obtain the predicted video frame.

Specifically, after obtaining the image fusion feature and the image detail feature, the terminal obtains a first fusion coefficient corresponding to the image fusion feature and a second fusion coefficient corresponding to the image detail feature, fuses the image fusion feature with the image detail feature based on the first fusion coefficient and the second fusion coefficient, to obtain the global image feature, and performs a deconvolution operation on the global image feature to obtain a predicted video frame with the same size as the target video frame.

The deconvolution operation is configured for gradually enlarging the global image feature to an original size, to obtain the predicted video frame having the same size as the target video frame.

In the foregoing embodiment, the terminal fuses the image fusion feature with the image detail feature, to obtain the global image feature, and may comprehensively use information about both the image fusion feature and the image detail feature, to describe image content of the target video frame more comprehensively, thereby performing image reconstruction based on the global image feature, to obtain the predicted video frame, leading to a better denoising effect, thereby improving the denoising effect of the target video denoising model.

In an embodiment, the process of the terminal fusing the image fusion feature with the image detail feature, to obtain the global image feature specifically includes the following operations: upsampling the image fusion feature, to obtain an upsampled image fusion feature; and fusing the upsampled image fusion feature with the image detail feature, to obtain the global image feature.

Specifically, after obtaining the image fusion feature, the terminal performs the deconvolution operation on the image fusion feature, to obtain the upsampled image fusion feature, obtains a first fusion coefficient corresponding to the upsampled image fusion feature and the second fusion coefficient corresponding to the image detail feature, and fuses the upsampled image fusion feature with the image detail feature based on the first fusion coefficient and the second fusion coefficient, to obtain the global image feature. Specifically, weighted fusion may be performed on the upsampled image fusion feature and the image detail feature based on the first fusion coefficient and the second fusion coefficient.

In the foregoing embodiment, the terminal upsamples the image fusion feature, to obtain the upsampled image fusion feature with the same resolution as the target video frame, and fuses the upsampled image fusion feature with the image detail feature, to obtain the global image feature. Advantages of the two features can be fully used, to further improve an expression capability of the global image feature, thereby improving the denoising effect of the target video denoising model.

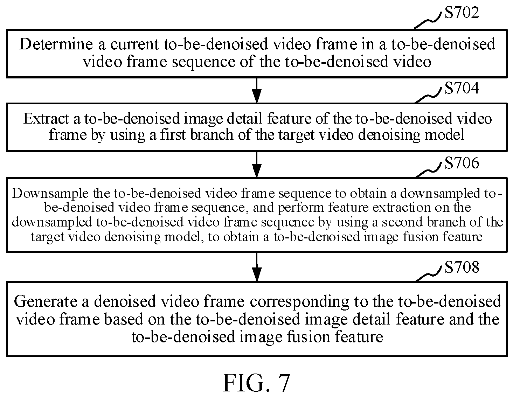

In an embodiment, after obtaining the target video denoising model, the terminal may further denoise the to-be-denoised video by using the target video denoising model. As shown in FIG. 7, the process specifically includes the following operations:

S702: Determine a current to-be-denoised video frame in a to-be-denoised video frame sequence of the to-be-denoised video.

Specifically, the terminal obtains the to-be-denoised video, extracts the to-be-denoised video frame sequence from the to-be-denoised video, and determines the current to-be-denoised video frame on which denoising is to be performed from the to-be-denoised video frame sequence. For example, if the to-be-denoised video frame sequence extracted by the terminal from the to-be-denoised video includes 10 video frames, and the current to-be-denoised video frame is the second frame, the second frame is obtained from the to-be-denoised video frame sequence.

S704: Extract a to-be-denoised image detail feature of the to-be-denoised video frame by using a first branch of the target video denoising model.

The target video denoising model is a trained video denoising model obtained by training the video denoising model. The first branch of the target video denoising model may be specifically a high-resolution branch, and is configured to process the current to-be-denoised video frame with an original resolution.

Specifically, after obtaining the current to-be-denoised video frame of the to-be-denoised video, the terminal inputs the current to-be-denoised video frame into the first branch of the target video denoising model, and processes the current to-be-denoised video frame through the network layer of the first branch, to obtain the to-be-denoised image detail feature of the to-be-denoised video frame.

S706: Downsample the to-be-denoised video frame sequence to obtain a downsampled to-be-denoised video frame sequence, and perform feature extraction on the downsampled to-be-denoised video frame sequence by using a second branch of the target video denoising model, to obtain a to-be-denoised image fusion feature.

The downsampled to-be-denoised video frame sequence refers to a video frame sequence obtained by downsampling the to-be-denoised video frame sequence. During image processing, downsampling refers to reducing a resolution of an image, thereby reducing a size of the image while reducing detail information in the image, and is usually configured for reducing a computation amount and memory usage while accelerating a prediction process of the model.

The second branch of the target video denoising model may be specifically a low-resolution branch, and is configured to process the downsampled to-be-denoised video frame sequence. A resolution of each downsampled to-be-denoised video frame in the downsampled to-be-denoised video frame sequence is a low resolution, and a size or detail information of each downsampled to-be-denoised video frame in the low-resolution downsampled to-be-denoised video frame sequence is reduced. Processing the downsampled to-be-denoised video frame sequence by using the second branch of the target video denoising model can effectively reduce a computation amount, and improve the operation efficiency of the model, while enhancing a generalization capability of the model, making the model more suitable for processing videos with different resolutions.

The to-be-denoised image fusion feature is a feature representation obtained by fusing features of at least two downsampled to-be-denoised video frames in the downsampled to-be-denoised video frame sequence. For noisy video data, it is often difficult to obtain a good denoising effect by using a single frame of image for denoising, because the single frame of image may have excessive noise and distortion, and cannot provide sufficient information. A feature expression capability can be improved by fusing features of a plurality of downsampled to-be-denoised video frames, thereby improving the denoising effect of the target video denoising model. In addition, a feature obtained after feature extraction is performed on each downsampled to-be-denoised video frame in the downsampled to-be-denoised video frame sequence represents that information loss may exist. Fusing the features of the plurality of downsampled to-be-denoised video frames can improve the feature expression capability, thereby improving the denoising effect of the target video denoising model.

Specifically, after obtaining the to-be-denoised video frame sequence, the terminal downsamples each to-be-denoised video frame in the to-be-denoised video frame sequence, to obtain the downsampled to-be-denoised video frame sequence, inputs the downsampled to-be-denoised video frame sequence into the second branch of the target video denoising model, and processes each downsampled to-be-denoised video frame in the downsampled to-be-denoised video frame sequence by using each sub-branch of the second branch, to obtain the to-be-denoised image fusion feature.

In an embodiment, the second branch includes an optical flow network, a target frame sub-branch, and another frame sub-branch, and S706 specifically includes the following operations: determining optical flow information between a current downsampled to-be-denoised video frame and a corresponding adjacent downsampled to-be-denoised video frame in the downsampled to-be-denoised video frame sequence by using the optical flow network; performing feature extraction on the downsampled to-be-denoised video frame sequence by using the another frame sub-branch, to obtain a to-be-denoised consecutive video frame feature corresponding to the current downsampled to-be-denoised video frame; aligning the to-be-denoised consecutive video frame feature with the current downsampled to-be-denoised video frame based on the optical flow information, to obtain a to-be-denoised aligned video frame feature; and processing the to-be-denoised aligned video frame feature by using the target sub-branch, to obtain the to-be-denoised image fusion feature.

In an embodiment, the downsampled to-be-denoised video frame sequence includes a current downsampled to-be-denoised video frame and a downsampled to-be-denoised consecutive video frame, the downsampled to-be-denoised consecutive video frame includes at least one of a downsampled to-be-denoised preceding video frame or a downsampled to-be-denoised subsequent video frame, the another frame sub-branch includes at least one of a preceding frame sub-branch or a subsequent frame sub-branch, the to-be-denoised consecutive video frame feature includes at least one of a to-be-denoised preceding video frame feature or a to-be-denoised subsequent video frame feature, and the to-be-denoised aligned video frame feature includes at least one of a to-be-denoised preceding aligned video frame feature or a to-be-denoised subsequent aligned video frame feature. The process of the terminal determining the optical flow information between the current downsampled to-be-denoised video frame and the corresponding adjacent downsampled video frame in the downsampled to-be-denoised video frame sequence by using the optical flow network specifically includes the following operations: determining third optical flow information between the current downsampled to-be-denoised video frame and the adjacent downsampled video frame in the downsampled to-be-denoised preceding video frame by using the optical flow network; and determining fourth optical flow information between the current downsampled to-be-denoised video frame and the adjacent downsampled video frame in the downsampled to-be-denoised subsequent video frame by using the optical flow network.

In an embodiment, the process of the terminal performing feature extraction on the downsampled to-be-denoised video frame sequence by using the another frame sub-branch, to obtain the to-be-denoised consecutive video frame feature corresponding to the current downsampled to-be-denoised video frame includes the following operations: performing feature extraction on the downsampled to-be-denoised preceding video frame by using a forward network layer of the preceding frame sub-branch, to obtain the to-be-denoised preceding video frame feature; and performing feature extraction on the downsampled to-be-denoised subsequent video frame by using a backward network layer of the subsequent frame sub-branch, to obtain the to-be-denoised subsequent video frame feature.

In an embodiment, the process of the terminal aligning the to-be-denoised consecutive video frame feature with the current downsampled to-be-denoised video frame based on the optical flow information, to obtain the to-be-denoised aligned video frame feature includes the following operations: aligning the to-be-denoised preceding video frame feature with the current downsampled to-be-denoised video frame based on the third optical flow information, to obtain the to-be-denoised preceding aligned video frame feature; and aligning the to-be-denoised subsequent video frame feature with the current downsampled to-be-denoised video frame based on the fourth optical flow information, to obtain the to-be-denoised subsequent aligned video frame feature.

In an embodiment, the process of the terminal processing the to-be-denoised preceding aligned video frame feature by using the target sub-branch, to obtain the image fusion feature includes the following operations: processing the to-be-denoised preceding aligned video frame feature by using the forward network layer of the target sub-branch, to obtain a to-be-denoised preceding image fusion feature; processing the to-be-denoised subsequent aligned video frame feature by using the backward network layer of the target sub-branch, to obtain a to-be-denoised subsequent image fusion feature; and determining the to-be-denoised image fusion feature based on at least one of the to-be-denoised preceding image fusion feature or the to-be-denoised subsequent image fusion feature.

In an embodiment, the process of the terminal determining the to-be-denoised image fusion feature based on at least one of the to-be-denoised preceding image fusion feature or the to-be-denoised subsequent image fusion feature includes the following operations: when the downsampled to-be-denoised consecutive video frame includes only the downsampled to-be-denoised preceding video frame, directly determining the to-be-denoised preceding image fusion feature as the to-be-denoised image fusion feature; when the downsampled to-be-denoised consecutive video frame includes only the downsampled to-be-denoised subsequent video frame, directly determining the to-be-denoised subsequent image fusion feature as the to-be-denoised image fusion feature; and when the downsampled to-be-denoised consecutive video frame includes the downsampled to-be-denoised preceding video frame and the downsampled to-be-denoised subsequent video frame, splicing the to-be-denoised preceding image fusion feature and the to-be-denoised subsequent image fusion feature, to obtain a to-be-denoised spliced image feature; and performing convolution processing on the to-be-denoised spliced image feature, to obtain the to-be-denoised image fusion feature.

S708: Generate a denoised video frame corresponding to the to-be-denoised video frame based on the to-be-denoised image detail feature and the to-be-denoised image fusion feature.

Specifically, after obtaining the to-be-denoised image fusion feature and the to-be-denoised image detail feature, the terminal fuses the to-be-denoised image fusion feature with the to-be-denoised image detail feature, to obtain a to-be-denoised global image feature, and generates the predicted video frame based on the to-be-denoised global image feature.

In the foregoing embodiment, the terminal determines the current to-be-denoised video frame in the to-be-denoised video frame sequence of the to-be-denoised video; extracts the to-be-denoised image detail feature of the to-be-denoised video frame by using the first branch of the target video denoising model; after obtaining the downsampled to-be-denoised video frame sequence corresponding to the to-be-denoised video frame sequence, performs feature extraction on the downsampled to-be-denoised video frame sequence by using the second branch of the target video denoising model, to obtain the to-be-denoised image fusion feature; and generates the denoised video frame corresponding to the to-be-denoised video frame based on the to-be-denoised image detail feature and the to-be-denoised image fusion feature. The temporal correlation and continuity of videos are fully considered, and the computation amount can be effectively reduced, thereby improving the operation efficiency of the model. Therefore, under limited computational resources, the feature of the to-be-denoised video frame can be well extracted, thereby improving the denoising effect of the target video denoising model.

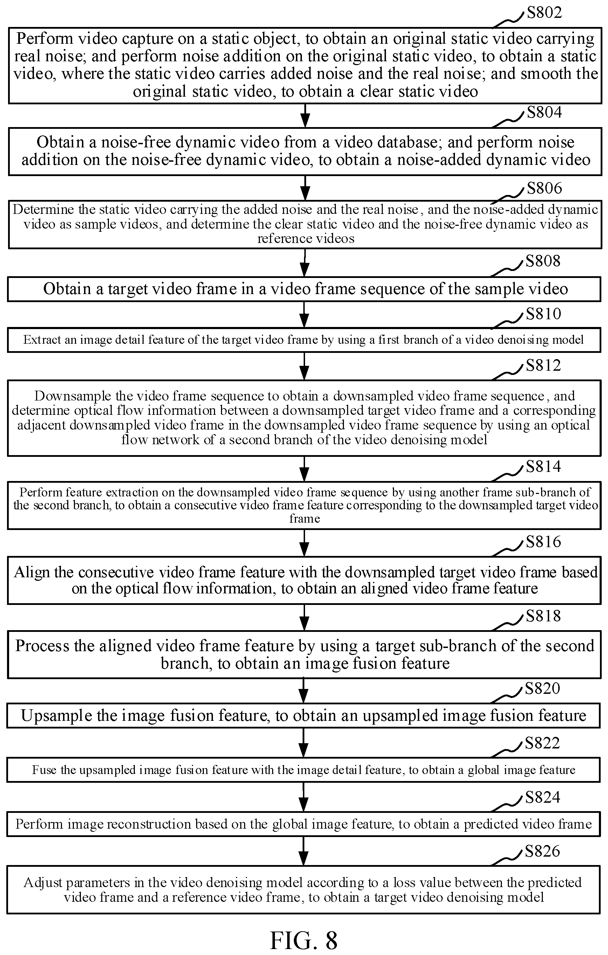

In an embodiment, as shown in FIG. 8, a video denoising model processing method is provided. An example in which the method is applied to the computer device in FIG. 1 is used for description, and the method includes the following operations:

S802: Perform video capture on a static object, to obtain an original static video carrying real noise; and perform noise addition on the original static video, to obtain a static video, where the static video carries added noise and the real noise; and smooth the original static video, to obtain a clear static video.

S804: Obtain a noise-free dynamic video from a video database; and perform noise addition on the noise-free dynamic video, to obtain a noise-added dynamic video.

S806: Determine the static video carrying the added noise and the real noise, and the noise-added dynamic video as sample videos, and determine the clear static video and the noise-free dynamic video as reference videos.

S808: Obtain a target video frame in a video frame sequence of the sample video.

S810: Extract an image detail feature of the target video frame by using a first branch of a video denoising model.

S812: Downsample the video frame sequence to obtain a downsampled video frame sequence, and determine optical flow information between a downsampled target video frame and a corresponding adjacent downsampled video frame in the downsampled video frame sequence by using an optical flow network of a second branch of the video denoising model.

S814: Perform feature extraction on the downsampled video frame sequence by using another frame sub-branch of the second branch, to obtain a consecutive video frame feature corresponding to the downsampled target video frame.

S816: Align the consecutive video frame feature with the downsampled target video frame based on the optical flow information, to obtain an aligned video frame feature.

S818: Process the aligned video frame feature by using a target sub-branch of the second branch, to obtain an image fusion feature.

S820: Upsample the image fusion feature, to obtain an upsampled image fusion feature.

S822: Fuse the upsampled image fusion feature with the image detail feature, to obtain a global image feature.

S824: Perform image reconstruction based on the global image feature, to obtain a predicted video frame.

S826: Adjust parameters in the video denoising model according to a loss value between the predicted video frame and a reference video frame, to obtain a target video denoising model.

The reference video frame is a video frame in the reference video that corresponds to the target video frame; and the target video denoising model is configured to denoise a to-be-denoised video, and the reference video includes a clear static video obtained by smoothing the static video and a noise-free dynamic video.

This application further provides an application scenario to which the foregoing video denoising model processing method is applied, and the method includes the following operations:

1. Training data preparation

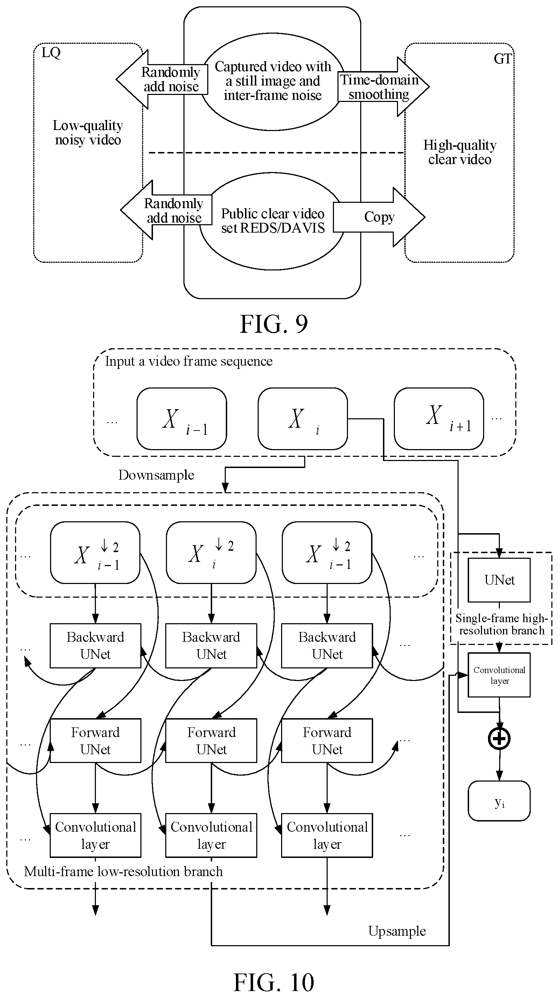

Referring to a schematic diagram of training data shown in FIG. 9, the training data is derived from two parts. One part is a manually captured video with real noise and a still image, and the other part is a public clear video set. Noise is manually added to the video with real noise and the clear video separately, to obtain a low-quality noise video (LQ). Time-domain smoothing is performed on the video with real noise, and the clear video is copied, to obtain a high-quality clear video (GT). The low-quality noise video (LQ) is used as a sample video, and the corresponding high-quality clear video (GT) is used as a reference video, to construct a paired data set. The constructed paired data set is used to train the video denoising model.

2. Model training

Specifically, a network structure of the video denoising model is shown in FIG. 10. The video denoising model includes a high-resolution branch and a low-resolution branch, the low-resolution branch includes an optical flow network and a plurality of sub-branches, and each sub-branch includes a forward UNet and a backward UNet. A terminal obtains a target video frame in a video frame sequence of a sample video, extracts an image detail feature of the target video frame by using the high-resolution branch of the video denoising model, inputs, after downsampling the video frame sequence to obtain a downsampled video frame sequence, the downsampled video frame sequence into the low-resolution branch, determines optical flow information between adjacent downsampled video frames in the downsampled video frame sequence by using the optical flow network of a second branch of the video denoising model, processes a corresponding downsampled video frame by using another sub-branch other than a target sub-branch corresponding to the target video frame in the low-resolution branch and the optical flow information, to obtain a consecutive video frame feature corresponding to a downsampled target video frame, aligns the consecutive video frame feature with the downsampled target video frame based on the downsampled target video frame and optical flow information between the downsampled target video frame and an adjacent downsampled video frame, to obtain an aligned video frame feature, processes the aligned video frame feature by using a target sub-branch of the low-resolution branch, to obtain an image fusion feature, upsamples the image fusion feature, to obtain an upsampled image fusion feature, fuses the upsampled image fusion feature with the image detail feature, to obtain a global image feature, performs image reconstruction based on the global image feature, to obtain a predicted video frame, determines a loss value according to the predicted video frame and a video frame in the reference video that corresponds to the target video frame, and adjusts parameters in the video denoising model based on the loss value, to obtain a target video denoising model.

The process of performing feature extraction on the downsampled video frame sequence by using the low-resolution branch of the video denoising model, to obtain the image fusion feature is described by using an example. An example in which the video frame sequence includes 10 video frames, and the target video frame is an $i^{th}$ frame is used for description. After the 10 video frames in the video frame sequence are downsampled to obtain 10 downsampled video frames, the 10 downsampled video frames are inputted into the low-resolution branch of the video denoising model, and each downsampled video frame corresponds to a sub-branch in the low-resolution branch. Using an $(i+1)^{th}$ frame to the $i^{th}$ frame and an $(i-1)^{th}$ frame to the $i^{th}$ frame as an example, first, first optical flow information between the $(i+1)^{th}$ frame and the $i^{th}$ frame and second optical flow information between the $(i-1)^{th}$ frame and the $i^{th}$ frame are respectively determined by using a pre-trained optical flow network SpyNet. Feature extraction is performed on the $(i+1)^{th}$ frame by using a backward UNet layer of the sub-branch corresponding to the $(i+1)^{th}$ frame, to obtain a subsequent video frame feature, feature extraction is performed on the $(i-1)^{th}$ frame by using a forward UNet layer of the sub-branch corresponding to the $(i-1)^{th}$ frame, to obtain a preceding video frame feature, and the preceding video frame feature and the subsequent video frame feature are respectively aligned with the $i^{th}$ frame based on the first optical flow information and the second optical flow information, to obtain a preceding aligned video frame feature and a subsequent aligned video frame feature. Feature processing is performed on the preceding aligned video frame feature by using a forward UNet layer of the sub-branch corresponding to the $i^{th}$ frame, to obtain a preceding image fusion feature, feature processing is performed on the subsequent aligned video frame feature by using a backward UNet layer of the sub-branch corresponding to the $i^{th}$ frame, to obtain a subsequent image fusion feature, the preceding image fusion feature and the subsequent image fusion feature are spliced, to obtain a spliced image feature, and convolution processing is performed on the spliced image feature by using a convolutional layer of the sub-branch corresponding to the $i^{th}$ frame, to obtain an image fusion feature. The preceding video frame feature corresponding to the $(i-1)^{th}$ frame may be specifically determined based on an image of the $(i-1)^{th}$ frame and a video frame feature of the $(i-2)^{th}$ frame, and the subsequent video frame feature corresponding to the $(i+1)^{th}$ frame may be specifically determined based on an image of the $(i+1)^{th}$ frame and a video frame feature of the $(i+2)^{th}$ frame.

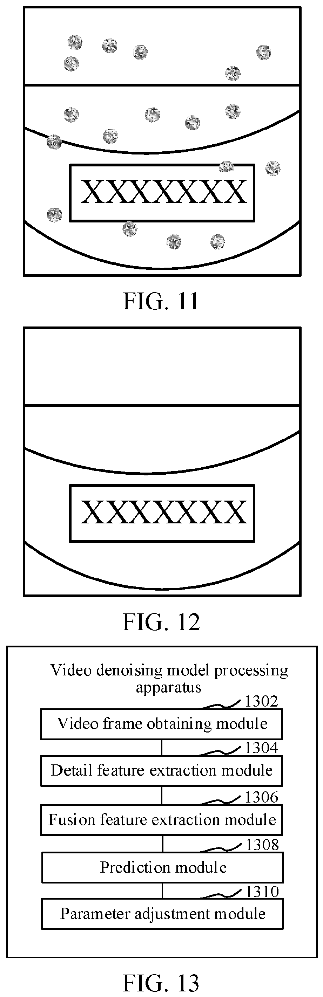

Referring to FIG. 11 and FIG. 12, FIG. 11 shows a to-be-denoised video frame of a to-be-denoised video, and the to-be-denoised video frame includes much noise. FIG. 12 shows a clear video frame obtained after the to-be-denoised video frame is denoised by using a trained target video denoising model in the solution of this application.

Steps in flowcharts involved in the foregoing embodiments are displayed in sequence according to indication of arrows, but the steps are not definitely performed in sequence according to a sequence indicated by the arrows. Unless explicitly specified in this application, execution of the steps is not strictly limited, and the steps may be performed in other sequences. In addition, at least some steps in the flowcharts involved in the foregoing embodiments may include a plurality of steps or a plurality of stages, and these steps or stages are not necessarily performed at a same moment, but may be performed at different moments. The steps or stages are not necessarily performed in sequence, but may be performed by turn or alternately with other steps or at least part of steps or stages in other steps.

Based on the same inventive concept, an embodiment of this application further provides a video denoising model processing apparatus configured to implement the foregoing video denoising model processing method. A problem solving implementation solution provided by the apparatus is similar to the implementation solution recorded in the foregoing method. Therefore, for specific limitations of one or more embodiments of the video denoising model processing apparatus provided below, reference may be made to the limitations of the video denoising model processing method above. Details are not described herein again.

In an embodiment, as shown in FIG. 13, a video denoising model processing apparatus (i.e., a video denoising model obtaining apparatus) is provided. The apparatus includes: a video frame obtaining module 1302, a detail feature extraction module 1304, a fusion feature extraction module 1306, a prediction module 1308, and a parameter adjustment module 1310.

The video frame obtaining module 1302 is configured to obtain a target video frame in a video frame sequence of a sample video.

The detail feature extraction module 1304 is configured to apply a first branch of the video denoising model to the target video frame, in order to extract an image detail feature of the target video frame.

The fusion feature extraction module 1306 is configured to downsample the video frame sequence to obtain a downsampled video frame sequence, and perform feature extraction on the downsampled video frame sequence by using a second branch of the video denoising model, to obtain an image fusion feature.

The prediction module 1308 is configured to generate a predicted video frame based on the image fusion feature and the image detail feature.

The parameter adjustment module 1310 is configured to adjust parameters in the video denoising model according to a loss value between the predicted video frame and a reference video frame, to obtain a target video denoising model, the reference video frame being a video frame in the reference video that corresponds to the target video frame; and the target video denoising model being configured to denoise a to-be-denoised video.

In the foregoing embodiment, after the target video frame is obtained from the video frame sequence of the sample video, the image detail feature of the target video frame is extracted by using the first branch of the video denoising model. After the downsampled video frame sequence corresponding to the video frame sequence is obtained, feature extraction is performed on the downsampled video frame sequence by using the second branch of the video denoising model, to obtain the image fusion feature. The predicted video frame is generated based on the image fusion feature and the image detail feature. In this way, not only temporal correlation and continuity of videos are fully considered, but also the computation amount can be effectively reduced and the operation efficiency of the model can be improved. Therefore, under limited computational resources, the parameters in the video denoising model can also be adjusted according to the loss value between the predicted video frame and the video frame in the reference video that corresponds to the target video frame, to obtain the target video denoising model with a good denoising effect. In addition, the sample video includes a static video carrying real noise and a noise-added dynamic video. The static video carrying real noise and the noise-added dynamic video are used as sample videos, and a clear static video and a noise-free dynamic video that are obtained by smoothing the static video are used as references, to better simulate a noise situation in a real scenario, thereby further improving the denoising effect of the target video denoising model.

In an embodiment, the sample video includes a static video carrying real noise and a noise-added dynamic video; and the reference video includes a clear static video obtained by smoothing the static video and a noise-free dynamic video.

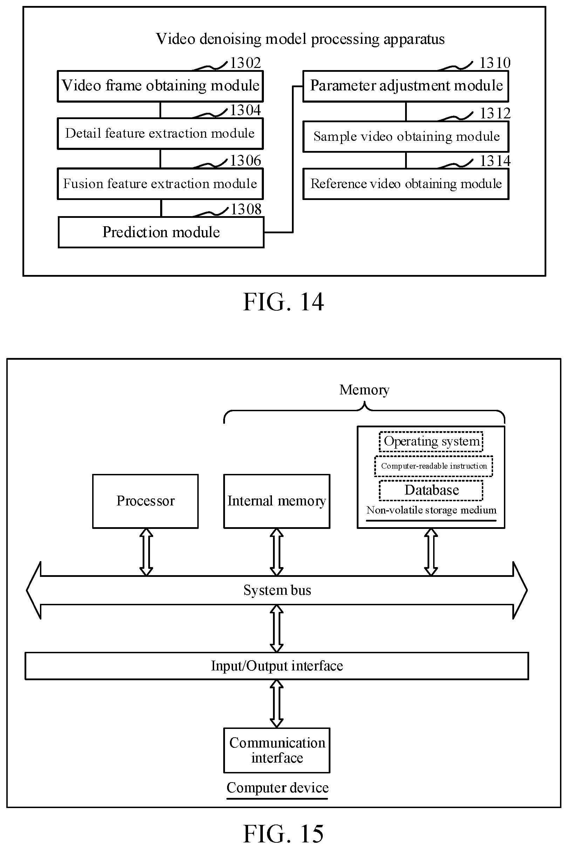

In an embodiment, as shown in FIG. 14, the apparatus further includes a sample video obtaining module 1312 and a reference video obtaining module 1314. The sample video obtaining module 1312 is configured to perform video capture on a static object, to obtain an original static video carrying real noise; and perform noise addition on the original static video, to obtain the static video, where the static video carries added noise and the real noise; and the reference video obtaining module 1314 is configured to smooth the original static video, to obtain the clear static video.

In an embodiment, the sample video obtaining module 1312 is further configured to obtain some pixels from each noisy video frame of the original static video; generate a corresponding first pixel image according to some pixels of each noisy video frame; generate a first initial noise image corresponding to each noisy video frame; fuse the first initial noise image with the first pixel image, to obtain a first noise image corresponding to each noisy video frame; and fuse each first noise image to the corresponding noisy video frame, to obtain the static video.

In an embodiment, the reference video obtaining module 1314 is further configured to obtain a noise-free dynamic video from a video database; and the sample video obtaining module 1312 is further configured to perform noise addition on the noise-free dynamic video, to obtain a noise-added dynamic video.

In an embodiment, a video frame in the noise-free dynamic video is a clear video frame; and the sample video obtaining module 1312 is further configured to select some pixels from each clear video frame; generate a corresponding second pixel image according to some pixels of each clear video frame; generate a second initial noise image corresponding to each clear video frame; fuse each second initial noise image with the corresponding second pixel image, to obtain a second noise image corresponding to each clear video frame; and fuse each second noise image to the corresponding clear video frame, to obtain the noise-added dynamic video.

In an embodiment, the second branch includes an optical flow network, a target frame sub-branch, and another frame sub-branch; and the fusion feature extraction module 1306 is further configured to determine optical flow information between a downsampled target video frame and a corresponding adjacent downsampled video frame in the downsampled video frame sequence by using the optical flow network; perform feature extraction on the downsampled video frame sequence by using the another frame sub-branch, to obtain a consecutive video frame feature corresponding to the downsampled target video frame; align the consecutive video frame feature with the downsampled target video frame based on the optical flow information, to obtain an aligned video frame feature; and process the aligned video frame feature by using the target sub-branch, to obtain the image fusion feature.

In an embodiment, the adjacent downsampled video frame includes a downsampled preceding video frame and a downsampled subsequent video frame, and the optical flow information includes first optical flow information and second optical flow information; the consecutive video frame feature includes a preceding video frame feature and a subsequent video frame feature; and the aligned video frame feature includes a preceding aligned video frame feature and a subsequent aligned video frame feature; and the fusion feature extraction module 1306 is further configured to determine first optical flow information between adjacent first downsampled video frames by using the optical flow network; determine second optical flow information between adjacent second downsampled video frames by using the optical flow network, where the first downsampled video frame is a downsampled video frame in the downsampled target video frame and the downsampled preceding video frame; and the second downsampled video frame is a downsampled video frame in the downsampled target video frame and the downsampled subsequent video frame; perform feature extraction on the downsampled preceding video frame by using a forward network layer of a preceding frame sub-branch, to obtain a preceding video frame feature; perform feature extraction on the downsampled subsequent video frame by using a backward network layer of a subsequent frame sub-branch, to obtain a subsequent video frame feature, where the preceding frame sub-branch and the subsequent frame sub-branch belong to the another frame sub-branch; align the preceding video frame feature with the downsampled target video frame based on the first optical flow information in the optical flow information, to obtain a preceding aligned video frame feature; align the subsequent video frame feature with the downsampled target video frame based on the second optical flow information in the optical flow information, to obtain a subsequent aligned video frame feature; process the preceding aligned video frame feature by using a forward network layer of the target sub-branch, to obtain a preceding image fusion feature; process the subsequent aligned video frame feature by using a backward network layer of the target sub-branch, to obtain a subsequent image fusion feature; and determine the image fusion feature based on the preceding image fusion feature and the subsequent image fusion feature.

In an embodiment, the fusion feature extraction module 1306 is configured to splice the preceding image fusion feature and the subsequent image fusion feature, to obtain a spliced image feature; and perform convolution processing on the spliced image feature, to obtain the image fusion feature.

In an embodiment, the prediction module 1308 is further configured to fuse the image fusion feature with the image detail feature, to obtain a global image feature; and perform image reconstruction based on the global image feature, to obtain the predicted video frame.

In an embodiment, the prediction module is further configured to upsample the image fusion feature, to obtain an upsampled image fusion feature; and fuse the upsampled image fusion feature with the image detail feature, to obtain the global image feature.

In an embodiment, the video frame obtaining module 1302 is further configured to determine a current to-be-denoised video frame in a to-be-denoised video frame sequence of the to-be-denoised video; the detail feature extraction module is further configured to extract a to-be-denoised image detail feature of the to-be-denoised video frame by using a first branch of the target video denoising model; the fusion feature extraction module 1306 is further configured to: after a downsampled to-be-denoised video frame sequence corresponding to the to-be-denoised video frame sequence is obtained, perform feature extraction on the downsampled to-be-denoised video frame sequence by using a second branch of the target video denoising model, to obtain a to-be-denoised image fusion feature; and the prediction module is further configured to generate a denoised video frame corresponding to the to-be-denoised video frame based on the to-be-denoised image detail feature and the to-be-denoised image fusion feature.

The modules in the foregoing video denoising model processing apparatus may be all or partially implemented by software, hardware, or a combination thereof. The foregoing modules may be built in or independent of a processor of a computer device in a hardware form, or may be stored in a memory of the computer device in a software form, so that the processor invokes and performs an operation corresponding to each of the foregoing modules.

In an embodiment, a computer device is provided. The computer device may be a server, and an internal structural diagram thereof may be shown in FIG. 15. The computer device includes a processor, a memory, an input/output (I/O) interface, and a communication interface. The processor, the memory, and the input/output interface are connected by using a system bus, and the communication interface is connected to the system bus by using the input/output interface. The processor of the computer device is configured to provide computing and control capabilities. The memory of the computer device includes a non-volatile storage medium and an internal memory. The non-volatile storage medium has an operating system, computer-readable instructions, and a database stored therein. The internal memory provides an environment for running of the operating system and the computer-readable instructions in the non-volatile storage medium. The database of the computer device is configured to store video data. The input/output interface of the computer device is configured to exchange information between the processor and an external device. The communication interface of the computer device is configured to connect to and communicate with an external terminal by using a network.

When the computer-readable instructions are executed by the processor, the video denoising model processing method is implemented.

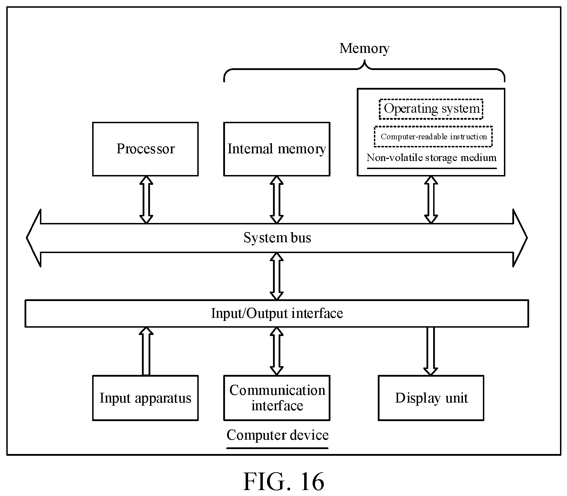

In an embodiment, a computer device is provided. The computer device may be a terminal, and an internal structural diagram thereof may be shown in FIG. 16. The computer device includes a processor, a memory, an input/output interface, a communication interface, a display unit, and an input apparatus. The processor, the memory, and the input/output interface are connected through a system bus, and the communication interface, the display unit, and the input apparatus are connected to the system bus through the input/output interface. The processor of the computer device is configured to provide computing and control capabilities. The memory of the computer device includes a non-volatile storage medium and an internal memory. The non-volatile storage medium has an operating system and computer-readable instructions stored therein. The internal memory provides an environment for running of the operating system and the computer-readable instructions in the non-volatile storage medium. The input/output interface of the computer device is configured to exchange information between the processor and an external device. The communication interface of the computer device is configured to communicate with an external terminal in a wired or a wireless mode, and the wireless mode can be implemented by using WIFI, a mobile cellular network, an NFC (near field communication), or other technologies. When the computer-readable instructions are executed by the processor, the video denoising model processing method is implemented. The display unit of the computer device is configured to form a visually visible picture, and may be a display screen, a projection apparatus, or a virtual reality imaging apparatus. The display screen may be a liquid crystal display screen or an electronic ink display screen. The input apparatus of the computer device may be a touch layer covering the display screen, or may be a key, a trackball, or a touch pad disposed on a housing of the computer device, or may be an external keyboard, a touch pad, a mouse, or the like.

A person skilled in the art may understand that the structure shown in FIG. 15 or FIG. 16 is only a block diagram of a partial structure related to the solution of this application, and does not limit the computer device to which the solution of this application is applied. Specifically, the computer device may include more or less components than those shown in the figure, or some components may be combined, or different component deployment may be used.

In an embodiment, a computer device is provided. The computer device includes a memory and a processor, the memory having computer-readable instructions stored therein, the processor, when executing the computer-readable instructions, implementing the operations in the foregoing method embodiments.

In an embodiment, a computer-readable storage medium is provided. The computer-readable storage medium has computer-readable instructions stored therein, the computer-readable instructions, when executed by a processor, causing the operations in the foregoing method embodiments to be implemented.

In an embodiment, a computer program product is provided. The computer program product has computer-readable instructions stored therein, the computer-readable instructions, when executed by a processor, causing the operations in the foregoing method embodiments to be implemented.

The user information (including, but not limited to, user equipment information, user personal information, and the like), data (including, but not limited to, data for analysis, stored data, displayed data, and the like), involved in this application all are information and data that are authorized by the user or fully authorized by each party, and the collection, use, and processing of relevant data need to comply with relevant laws and regulations of relevant countries and regions.

A person of ordinary skill in the art is to understand that all or a part of the processes of the method in the foregoing embodiments may be implemented by a computer program instructing relevant hardware. The computer program may be stored in a non-volatile computer-readable storage medium. When the computer program is executed, the processes of the method in the foregoing embodiments are performed. Any reference to a memory, a database, or another medium used in the embodiments provided in this application may include at least one of a non-volatile memory or a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM) or an external cache. For the purpose of description instead of limitation, the RAM is available in a plurality of forms, such as a static random access memory (SRAM) or a dynamic random access memory (DRAM). The database involved in the embodiments provided in this application may include at least one of a relational database or a non-relational database. The non-relational database may include a blockchain-based distributed database, but is not limited thereto. The processor involved in the embodiments provided in this application may be a general-purpose processor, a central processing unit, a graphics processing unit, a digital signal processor, a programmable logic device, a quantum computing-based data processing logic device, and are not limited thereto.

The technical features of the foregoing embodiments may be randomly combined. For the purpose of concise descriptions, not all possible combinations of the technical features in the foregoing embodiments are described, but as long as combinations of the technical features do not conflict each other, the combinations of the technical features are to be considered as falling within the scope of this specification.

The foregoing embodiments show only several implementations of this application, and descriptions thereof are in detail, but are not to be understood as limiting the patent scope of this application. A person of ordinary skill in the art may make various changes and improvements without departing from the ideas of this application, which shall all fall within the protection scope of this application. Therefore, the protection scope of this application is to be subject to the appended claims.

**Claims**

1. A video denoising model obtaining method, performed by a computer device, the method comprising:

   obtaining a target video frame in a video frame sequence of a sample video, and obtaining a reference video frame in a reference video corresponding to the sample video, the reference video frame being a video frame in the reference video and corresponding to the target video frame;

   applying a first branch of the video denoising model to the target video frame, in order to extract an image detail feature of the target video frame;

   downsampling the video frame sequence to obtain a downsampled video frame sequence, and performing feature extraction on the downsampled video frame sequence by using a second branch of the video denoising model, to obtain an image fusion feature;

   generating a predicted video frame based on the image fusion feature and the image detail feature; and

   adjusting parameters in the video denoising model according to a loss value between the predicted video frame and a reference video frame, to obtain a target video denoising model.

2. The method according to claim 1, wherein the sample video comprises a static video carrying real noise and a noise-added dynamic video; and the reference video comprises a clear static video obtained by smoothing the static video and a noise-free dynamic video.

3. The method according to claim 2, wherein the static video further carries added noise; and the method further comprises:

   performing video capture on a static object, to obtain an original static video carrying real noise;

   performing noise addition on the original static video, to obtain the static video, wherein the static video carries the added noise and the real noise; and

   smoothing the original static video, to obtain the clear static video.

4. The method according to claim 3, wherein the performing noise addition on the original static video, to obtain the static video comprises:

   obtaining some pixels from each noisy video frame of the original static video;

   generating a corresponding first pixel image according to some pixels of each noisy video frame;

   generating a first initial noise image corresponding to each noisy video frame;

   fusing the first initial noise image with the first pixel image, to obtain a first noise image corresponding to each noisy video frame; and

   fusing each first noise image to the corresponding noisy video frame, to obtain the static video.

5. The method according to claim 1, wherein the method further comprises:

   obtaining a noise-free dynamic video from a video database; and

   performing noise addition on the noise-free dynamic video, to obtain a noise-added dynamic video.

6. The method according to claim 5, wherein a video frame in the noise-free dynamic video is a clear video frame; and
   the performing noise addition on the noise-free dynamic video, to obtain a noise-added dynamic video comprises:

   selecting some pixels from each clear video frame;

   generating a corresponding second pixel image according to some pixels of each clear video frame;

   generating a second initial noise image corresponding to each clear video frame;

   fusing each second initial noise image with the corresponding second pixel image, to obtain a second noise image corresponding to each clear video frame; and

   fusing each second noise image to the corresponding clear video frame, to obtain the noise-added dynamic video.

7. The method according to claim 1, wherein the second branch comprises an optical flow network, a target frame sub-branch, and another frame sub-branch; and the performing feature extraction on the downsampled video frame sequence by using a second branch of the video denoising model, to obtain an image fusion feature comprises:

> determining optical flow information between a downsampled target video frame and a corresponding adjacent downsampled video frame in the downsampled video frame sequence by using the optical flow network;
> performing feature extraction on the downsampled video frame sequence by using the another frame sub-branch, to obtain a consecutive video frame feature corresponding to the downsampled target video frame;
> aligning the consecutive video frame feature with the downsampled target video frame based on the optical flow information, to obtain an aligned video frame feature; and
> processing the aligned video frame feature by using the target sub-branch, to obtain the image fusion feature.

8. The method according to claim 7, wherein the adjacent downsampled video frame comprises a downsampled preceding video frame and a downsampled subsequent video frame; the optical flow information comprises first optical flow information and second optical flow information; the consecutive video frame feature comprises a preceding video frame feature and a subsequent video frame feature; the aligned video frame feature comprises a preceding aligned video frame feature and a subsequent aligned video frame feature;

the determining optical flow information between a downsampled target video frame and a corresponding adjacent downsampled video frame in the downsampled video frame sequence by using the optical flow network comprises:

> determining first optical flow information between adjacent first downsampled video frames by using the optical flow network; and determining second optical flow information between adjacent second downsampled video frames by using the optical flow network, wherein the first downsampled video frame is a downsampled video frame in the downsampled target video frame and the downsampled preceding video frame; and the second downsampled video frame is a downsampled video frame in the downsampled target video frame and the downsampled subsequent video frame;
> the performing feature extraction on the downsampled video frame sequence by using the another frame sub-branch, to obtain a consecutive video frame feature corresponding to the downsampled target video frame comprises:

> performing feature extraction on the downsampled preceding video frame by using a forward network layer of a preceding frame sub-branch, to obtain a preceding video frame feature; and performing feature extraction on the downsampled subsequent video frame by using a backward network layer of a subsequent frame sub-branch, to obtain a subsequent video frame feature, wherein the preceding frame sub-branch and the subsequent frame sub-branch belong to the another frame sub-branch;
> the aligning the consecutive video frame feature with the downsampled target video frame based on the optical flow information, to obtain an aligned video frame feature comprises:

> > aligning the preceding video frame feature with the downsampled target video frame based on the first optical flow information, to obtain a preceding aligned video frame feature; and aligning the subsequent video frame feature with the downsampled target video frame based on the second optical flow information, to obtain a subsequent aligned video frame feature; and
> > the processing the aligned video frame feature by using the target sub-branch, to obtain the image fusion feature comprises:

> > > processing the preceding aligned video frame feature by using a forward network layer of the target sub-branch, to obtain a preceding image fusion feature; and processing the subsequent aligned video frame feature by using a backward network layer of the target sub-branch, to obtain a subsequent image fusion feature; and
> > > determining the image fusion feature based on the preceding image fusion feature and the subsequent image fusion feature.

9. The method according to claim 8, wherein the determining the image fusion feature based on the preceding image fusion feature and the subsequent image fusion feature comprises:

> splicing the preceding image fusion feature and the subsequent image fusion feature, to obtain a spliced image feature; and

performing convolution processing on the spliced image feature, to obtain the image fusion feature.

10. The method according to claim 1, wherein the generating a predicted video frame based on the image fusion feature and the image detail feature comprises:

fusing the image fusion feature with the image detail feature, to obtain a global image feature; and
performing image reconstruction based on the global image feature, to obtain the predicted video frame.

11. The method according to claim 10, wherein the fusing the image fusion feature with the image detail feature, to obtain a global image feature comprises:

upsampling the image fusion feature, to obtain an upsampled image fusion feature; and
fusing the upsampled image fusion feature with the image detail feature, to obtain the global image feature.

12. The method according to any one of claims 1 to 11, wherein the method further comprises:

determining a current to-be-denoised video frame in a to-be-denoised video frame sequence of the to-be-denoised video;
extracting a to-be-denoised image detail feature of the to-be-denoised video frame by using a first branch of the target video denoising model;
downsampling the to-be-denoised video frame sequence to obtain a downsampled to-be-denoised video frame sequence, and performing feature extraction on the downsampled to-be-denoised video frame sequence by using a second branch of the target video denoising model, to obtain a to-be-denoised image fusion feature; and
generating a denoised video frame corresponding to the to-be-denoised video frame based on the to-be-denoised image detail feature and the to-be-denoised image fusion feature.

13. A video denoising model obtaining apparatus, comprising:

a video frame obtaining module, configured to obtain a target video frame in a video frame sequence of a sample video, and obtain a reference video frame in a reference video corresponding to the sample video, the reference video frame being a video frame in the reference video and corresponding to the target video frame;
a detail feature extraction module, configured to apply a first branch of the video denoising model to the target video frame, in order to extract an image detail feature of the target video frame;
a fusion feature extraction module, configured to downsample the video frame sequence to obtain a downsampled video frame sequence, and perform feature extraction on the downsampled video frame sequence by using a second branch of the video denoising model, to obtain an image fusion feature;
a prediction module, configured to generate a predicted video frame based on the image fusion feature and the image detail feature;
a parameter adjustment module, configured to adjust parameters in the video denoising model according to a loss value between the predicted video frame and a reference video frame, to obtain a target video denoising model.

14. A computer device, comprising a memory and a processor, the memory having computer-readable instructions stored therein, and the processor implementing the operations in the method according to any one of claims 1 to 12 when executing the computer-readable instructions.

15. A computer-readable storage medium, having computer-readable instructions stored therein, the computer-readable instructions, when executed by a processor, causing the operations in the method according to any one of claims 1 to 12 to be implemented.

16. A computer program product, comprising computer-readable instructions, the computer-readable instructions, when executed by a processor, causing the operations in the method according to any one of claims 1 to 12 to be implemented.

FIG. 1

S202

Obtain a target video frame in a video frame sequence of a sample video, and obtain a reference video corresponding to the sample video

S204

Extract an image detail feature of the target video frame by using a first branch of a video denoising model

S206

Downsample the video frame sequence to obtain a downsampled video frame sequence, and perform feature extraction on the downsampled video frame sequence by using a second branch of the video denoising model, to obtain an image fusion feature

S208

Generate a predicted video frame based on the image fusion feature and the image detail feature

S210

Adjust parameters in the video denoising model according to a loss value between the predicted video frame and a reference video frame, to obtain a target video denoising model

FIG. 2a

Reference video → Reference video frame

Predicted video frame

Loss value

Guide model parameter adjustment

Target video frame

First branch

Image detail feature

Video frame sequence

First frame

Second frame

...

$i^{th}$ frame

...

$n^{th}$ frame

Downsample

Downsampled video frame sequence

First frame

Second frame

...

$i^{th}$ frame

...

$n^{th}$ frame

Sample video →

Image fusion feature

Second branch

Video denoising model

FIG. 2b

(a)      (b)      (c)      (d)

FIG. 3

FIG. 4

FIG. 5

S602

Determine optical flow information between a downsampled target video frame and a corresponding adjacent downsampled video frame in the downsampled video frame sequence by using the optical flow network

S604

Perform feature extraction on the downsampled video frame sequence by using the another frame sub-branch, to obtain a consecutive video frame feature corresponding to the downsampled target video frame

S606

Align the consecutive video frame feature with the downsampled target video frame based on the optical flow information, to obtain an aligned video frame feature

S608

Process the aligned video frame feature by using the target sub-branch, to obtain the image fusion feature

FIG. 6

S702

Determine a current to-be-denoised video frame in a to-be-denoised video frame sequence of the to-be-denoised video

S704

Extract a to-be-denoised image detail feature of the to-be-denoised video frame by using a first branch of the target video denoising model

S706

Downsample the to-be-denoised video frame sequence to obtain a downsampled to-be-denoised video frame sequence, and perform feature extraction on the downsampled to-be-denoised video frame sequence by using a second branch of the target video denoising model, to obtain a to-be-denoised image fusion feature

S708

Generate a denoised video frame corresponding to the to-be-denoised video frame based on the to-be-denoised image detail feature and the to-be-denoised image fusion feature

FIG. 7

~S802

Perform video capture on a static object, to obtain an original static video carrying real noise; and perform noise addition on the original static video, to obtain a static video, where the static video carries added noise and the real noise; and smooth the original static video, to obtain a clear static video

↓ ~S804

Obtain a noise-free dynamic video from a video database; and perform noise addition on the noise-free dynamic video, to obtain a noise-added dynamic video

↓ ~S806

Determine the static video carrying the added noise and the real noise, and the noise-added dynamic video as sample videos, and determine the clear static video and the noise-free dynamic video as reference videos

↓ ~S808

Obtain a target video frame in a video frame sequence of the sample video

↓ ~S810

Extract an image detail feature of the target video frame by using a first branch of a video denoising model

↓ ~S812

Downsample the video frame sequence to obtain a downsampled video frame sequence, and determine optical flow information between a downsampled target video frame and a corresponding adjacent downsampled video frame in the downsampled video frame sequence by using an optical flow network of a second branch of the video denoising model

↓ ~S814

Perform feature extraction on the downsampled video frame sequence by using another frame sub-branch of the second branch, to obtain a consecutive video frame feature corresponding to the downsampled target video frame

↓ ~S816

Align the consecutive video frame feature with the downsampled target video frame based on the optical flow information, to obtain an aligned video frame feature

↓ ~S818

Process the aligned video frame feature by using a target sub-branch of the second branch, to obtain an image fusion feature

↓ ~S820

Upsample the image fusion feature, to obtain an upsampled image fusion feature

↓ ~S822

Fuse the upsampled image fusion feature with the image detail feature, to obtain a global image feature

↓ ~S824

Perform image reconstruction based on the global image feature, to obtain a predicted video frame

↓ ~S826

Adjust parameters in the video denoising model according to a loss value between the predicted video frame and a reference video frame, to obtain a target video denoising model

## FIG. 8

FIG. 9

FIG. 10

FIG. 11

FIG. 12

FIG. 13

**Video denoising model processing apparatus**

Video frame obtaining module — 1302

Detail feature extraction module — 1304

Fusion feature extraction module — 1306

Prediction module — 1308

Parameter adjustment module — 1310

Sample video obtaining module — 1312

Reference video obtaining module — 1314

## FIG. 14

Memory

Operating system

Computer-readable instruction

Database

Non-volatile storage medium

Processor

Internal memory

System bus

Input/Output interface

Communication interface

Computer device

## FIG. 15

FIG. 16

## INTERNATIONAL SEARCH REPORT

| | International application No. |
|---|---|
| | **PCT/CN2024/079883** |

**A. CLASSIFICATION OF SUBJECT MATTER**

G06T 5/00(2024.01)i; G06V 10/30(2022.01)i; G06V 10/80(2022.01)i; G06V 20/40(2022.01)i; H04N 5/262(2006.01)i

According to International Patent Classification (IPC) or to both national classification and IPC

**B. FIELDS SEARCHED**

Minimum documentation searched (classification system followed by classification symbols)

IPC: G06T, G06V, H04N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 视频, 去噪, 模型, 下采样, 特征, 细节, 融合, 损失, 动态, 静态, 光流, video, denoising, model, down, sampling, feature, detail, fusion, loss, dynamic, static, optical, flow

**C. DOCUMENTS CONSIDERED TO BE RELEVANT**

| Category* | Citation of document, with indication, where appropriate, of the relevant passages | Relevant to claim No. |
|---|---|---|
| PX | CN 116977200 A (TENCENT TECHNOLOGY (SHENZHEN) CO., LTD.) 31 October 2023 (2023-10-31) <br> claims 1-15, and description, paragraphs [116]-[152] | 1-16 |
| A | CN 113034401 A (UNIVERSITY OF SCIENCE AND TECHNOLOGY OF CHINA) 25 June 2021 (2021-06-25) <br> description, paragraphs [0063]-[0113], and figures 1-8 | 1-16 |
| A | CN 113011562 A (HUAWEI TECHNOLOGIES CO., LTD. et al.) 22 June 2021 (2021-06-22) <br> entire document | 1-16 |
| A | CN 112686828 A (TENCENT TECHNOLOGY (SHENZHEN) CO., LTD.) 20 April 2021 (2021-04-20) <br> entire document | 1-16 |
| A | CN 111738952 A (BOE TECHNOLOGY GROUP CO., LTD.) 02 October 2020 (2020-10-02) <br> entire document | 1-16 |
| A | US 11151695 B1 (PERCEIVE CORP.) 19 October 2021 (2021-10-19) <br> entire document | 1-16 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **27 May 2024** | **31 May 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/079883**

| Patent document cited in search report | | | Publication date (day/month/year) | Patent family member(s) | | | Publication date (day/month/year) |
|---|---|---|---|---|---|---|---|
| CN | 116977200 | A | 31 October 2023 | None | | | |
| CN | 113034401 | A | 25 June 2021 | None | | | |
| CN | 113011562 | A | 22 June 2021 | None | | | |
| CN | 112686828 | A | 20 April 2021 | HK | 40042943 | A0 | 10 September 2021 |
| CN | 111738952 | A | 02 October 2020 | US | 2023177652 | A1 | 08 June 2023 |
| | | | | WO | 2021258959 | A1 | 30 December 2021 |
| US | 11151695 | B1 | 19 October 2021 | US | 11868871 | B1 | 09 January 2024 |
| | | | | US | 11620495 | B1 | 04 April 2023 |
| | | | | US | 2024153044 | A1 | 09 May 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023104577981